# EUROPÄISCHE PATENTSCHRIFT

(11) **EP 2 156 916 B1**
(45) Veröffentlichungstag und Bekanntmachung des Hinweises auf die Patenterteilung: **23.03.2011**
(21) Anmeldenummer: 09009475.6
(22) Anmeldetag: 22.07.2009
(51) Int. Cl.: B23K 9/028, B23K 31/02, B23K 33/00, F22B 37/10, C21D 9/50

(54) **Verfahren zur Herstellung von Dampferzeuger-Rohrwänden bestehend aus überwiegend 9-12% chromhaltigen, martensitischen Stählen**
Method of manufacturing steam producing tube walls composed mostly of martensitic steels containing 9-12% chromium
Méthode de fabrication de parois fait de tubes pour produire de la vapeur comprenant en majorité de l'acier martensitique avec 9 à 12 % de Chrome

(30) Priorität: 08.08.2008 DE 102008037085
(43) Veröffentlichungstag der Anmeldung: 24.02.2010
(73) Patentinhaber: Alstom Technology Ltd, 5401 Baden (CH)
(72) Erfinder: Hartwig, Ruben, 89150 Laichingen (DE); Mutter, Daniel, 70329 Stuttgart (DE); Helmrich, Andreas, 73630 Remshalden (DE); Schalk, Alois, 91589 Weinberg-Aurach (DE)

(56) Entgegenhaltungen:
- GB-A- 1 110 439
- JP-A- 2000 282 144
- US-A1- 2006 201 587
- US-B1- 6 210 806
- C. QIURONG ET AL: "NEW BOILER AND PIPING MATERIALS - DESIGN CONSIDERATION FOR ADVANCED CYCLE CONDITIONS" VGB POWERTECH, VGB POWERTECH, ESSEN, DE, Bd. 83, Nr. 11, 1. Januar 2003 (2003-01-01), Seiten 91-98, XP001185009 ISSN: 1435-3199

## Beschreibung

Die Erfindung bezieht sich auf ein Verfahren zur Herstellung von Dampferzeuger-Rohrwänden bestehend aus überwiegend 9-12% chromhaltigen, martensitischen Stählen.

Rohrwände werden vorwiegend in Dampferzeugern von mit fossilen Brennstoffen beheizten Kraftwerken eingesetzt. Die Rohrwände umfassen dabei eine in den meisten Fällen rechteckige Brennkammer sowie den darüber angeordneten Gaszug, in dem in der Regel aus Rohrschlangen gebildete Heizflächen angeordnet sind. Die jeweiligen Rohre der Rohrwände, die aus einer verschweißten Rohr-Steg-Rohr Kombination gebildet sind, führen ein durch die Verbrennung des fossilen Brennstoffes erhitztes Arbeitsmedium mit sich und geben es an weitere Prozesse weiter. Bei den bekannten geschweißten Rohrwänden werden üblicherweise die Werkstoffe 16Mo3, 13CrMo4-5 und 7CrMoVTiB10-10 (T24) sowie der von der ASME (American Society of Mechanical Engineers) zugelassene Werkstoff T23 eingesetzt. Diese Werkstoffe benötigen in der Regel keine Wärmebehandlung nach der schweißtechnischen Fertigung bzw. Verarbeitung der Rohrwände.

Der Wunsch nach Dampferzeugen mit höheren Wirkungsgraden, die unter anderem den CO₂-Ausstoß in die Atmosphäre verringern helfen, führt als eine von mehreren Maßnahmen zur Erhöhung der Dampfparameter des Dampferzeugers. Zur Erzielung bzw. Realisierung von höheren Dampfparametern, d.h. höheren Drücken und Temperaturen des Arbeitsmediums Dampfes, sind 9-12% chromhaltige, martensitische Stähle wie beispielsweise der Werkstoff X10CrWMoVNb9-2 (T92) als Rohrwand-Werkstoff notwendig, da die bisher verwendeten Werkstoffe den höheren Anforderungen nicht mehr genügen. Die neu einzusetzenden Stähle erfordern in jedem Fall eine Wärmebehandlung nach der schweißtechnischen Verarbeitung. Bei der Herstellung von Rohrwänden sind sowohl in der Werkstatt als auch auf der Baustelle bzw. Montage umfangreiche Schweißarbeiten erforderlich. Dies sind im Detail bezogen auf Werkstatt und Baustelle:
Werkstatt: Herstellung und Komplettierung der Rohrwandregister einschließlich sämtlicher Anschweißteile, Herstellung von Wandöffnungen bzw. Ausbiegungen sowie Herstellung von Wandbiegungen bzw. Eckbögen für die Ecken der Rohrwände innerhalb der Schrägwicklung, Herstellen von Übergangsbereichen von der Schräg- auf die Senkrechtberohrung.
Montage: Verschweißen der Segment- bzw. Registerstöße, Druckteilmontagestöße an Rundnähten einschließlich aller erforderlichen Füll- und Dichtschweißungen, Stöße bei geschlitzten Stegen (Montageschlitze) und Dichtschweißungen an Buchsen bzw. Hülsen im Bereich der Wanddurchtritte, Komplettierung von Anschweißteilen an den Wänden.

Durch Druckschrift WO 2004/051142 A1 wird ein Verfahren zur Herstellung einer Rohrwand offenbart, die aus mehreren Rohrwandregistern besteht. Ziel dieser Herstellung ist es, die Wärmenachbehandlung montageseitig auf der Baustelle vollständig zu vermeiden. Das Rohrwandregister besteht aus einem Material einer ersten Kategorie. An allen Verbindungsstellen werden Übergangsstücke aus einem Material einer zweiten Kategorie angebracht, so dass auf der Baustelle lediglich eine Verbindung zwischen den Übergangsstücken der zweiten Materialkategorie erfolgen muss. Im Unterschied zur ersten Materialkategorie ist das Material der zweiten Kategorie wärmenachbehandlungsfrei, so dass bei der Endmontage auf der Baustelle eine Wärmenachbehandlung entfallen kann.

Die Druckschrift DE 10 2006 062 348 A1 befasst sich mit dem Verfahren des Oberflächenstrahlens von Dampferzeugerbauteilen, die aus chromhaltigen martensitischen Stählen bestehen können.

Bei der Druckschrift DE 1 508 425 A geht es um das Anlassen durch einen zweistufigen Glühvorgang.

Aus Druckschrift DE 10 2004 032 611 A1 ist ein Verfahren bekannt, bei dem außerhalb des Brennraums eine Verbindung zwischen den Dampferzeuger-Heizflächen und einem Sammler bzw. Verteiler hergestellt werden soll. Die im Brennraum angeordneten und zum Sammler aus dem Brennraum herausgeführten Dampferzeuger-Heizflächen sind dabei aus austenitischem Material hergestellt. Zum Ausgleich der unterschiedlichen thermischen Ausdehnung der verschiedenen Materialien wird an der Stirnseite eines Rohrnippels zum Sammler hin ein Axialspiel freigehalten.

Druckschrift DE 1 426 641 A zeigt einen Aufbau einer Rohrwand auf, bei der die Rohre aus chromlegiertem Werkstoff und die Verbindungselemente aus nicht chromlegiertem Werkstoff bestehen. Dadurch wird erreicht, dass die Hauptschweißarbeit an einer bereits installierten Rohrwand oder beim Installieren am nicht chromlegiertem Material vorgenommen wird und lediglich kleine Schweißlängen am chromlegierten Rohr.

Die vorliegende Erfindung hat sich als Aufgabe gestellt, ein Verfahren zur Herstellung von Dampferzeuger-Rohrwänden bestehend aus überwiegend 9-12% chromhaltigen, martensitischen Stählen vorzuschlagen, bei der die Herstellung in effizienter und praktikabler Weise erfolgt. Insbesondere ist es Aufgabe der Erfindung, ein Verfahren zur Herstellung von Dampferzeuger-Rohrwänden bestehend aus überwiegend 9-12% chromhaltigen, martensitischen Stählen in der Werkstatt und auf der Baustelle vorzuschlagen, das durch folgende Randbedingungen definiert ist:
- Minimierung der Schweißarbeiten und der Wärmebehandlungen auf der Baustelle,
- Konzepte für konstruktiv erforderliche Schweißungen auf der Baustelle ohne nachfolgende Wärmebehandlung,
- Konzepte für konstruktiv erforderliche Schweißungen auf der Baustelle unter Anwendung einer optimierten lokalen Wärmebehandlungsstrategie.

Die vorstehende Aufgabe wird durch das Verfahren gemäß der Merkmale des Patentanspruches 1 gelöst.

Vorteilhafte Ausgestaltungen der Erfindung sind den Unteransprüchen zu entnehmen.

Durch die erfindungsgemäße Lösung wird ein Verfahren zur Herstellung von Dampferzeuger-Rohrwänden bestehend aus überwiegend 9-12% chromhaltigen, martensitischen Stählen geschaffen, das die nachfolgenden Vorteile aufweist:
- Effiziente und praktikable Machbarkeit der Herstellung von Rohrwänden bestehend aus überwiegend 9-12% chromhaltigen martensitischen Stählen,
- Steigerung des Dampferzeugerwirkungsgrades durch Realisierung höherer Dampfparameter,
- Verringerung des CO₂-Ausstoßes in die Atmosphäre durch Steigerung des Dampferzeugerwirkungsgrades.

In zweckmäßiger Ausbildung der Erfindung werden die Eckbögen als Einzel- oder Zwillingsbogen ausgeführt. Diese Maßnahme ermöglicht eine einfache Anpassung und Verbindung der Eckbögen bei der Montage derselben mit den Rohrwandregistern zweier benachbarter und rechtwinklig zueinander liegender Rohrwände.

Eine vorteilhafte Ausbildung der Erfindung sieht vor, dass zusätzlich zu dem Verfahrensschritt a) wenigstens einer der Stege eines Rohrwandregisters über einen Teilbereich seiner länglichen Erstreckung und ausgehend entweder von einem Ende des Steges oder von beiden Enden des Steges einen in Längsrichtung des Steges ausgebildeten länglichen Montageschlitz für den Ausgleich von Maßungenauigkeiten aufweist und dass der aus 9-12% chromhaltigem, martensitischem Stahl bestehende Steg im Bereich des Montageschlitzes durch einen aus einem Werkstoff bestehenden Steg ersetzt wird, der nicht anlasswärmebehandelt bzw. warmenachbehandelt werden muss. Durch diese Maßnahme wird es zum einen wesentlich erleichtert, bauliche Ungenauigkeiten der Rohrteilungen an den Rohrwandregistern auf der Baustelle sehr einfach zu kompensieren, da die Rohrteilungen der mit Montageschlitz versehenen Rohrwandregister leicht angeglichen werden können, d.h. die Rohre der angrenzenden Rohrwandregister, die ggf. nicht miteinander fluchten, können mittels Nutzung des Montageschlitzspoltes angeglichen werden, so dass die Rohre sich nach der Angleichung direkt gegenüber stehen und miteinander fluchten. Zum anderen können die vorhandenen Montageschlitze der angeglichenen Rohrwandregister anschließend montageseitig zugeschweißt werden. Durch die vorteilhafte Verwendung des aus einem nicht wärmezubehandelnden Werkstoff bestehenden und mit Montageschlifz versehenen Steges ist eine Anlasswärmebehandlung nach dem Verschweißen nicht erforderlich. Bei sehr schmalen Stegen kann es jedoch vorteilhaft sein, den Bereich der Füllschweißung des Montageschlitzes mit den angrenzenden Rohren einer Anlasswärmebehandlung zu unterziehen, da durch die Füllschweißung nicht nur der nicht zu wärmebehandelnde Steg, sondern auch die angrenzenden zu wärmebehandelnden Rohre mit Schweißtemperaturen beaufschlagt werden. In weiterer vorteilhafter Ausbildung entspricht die Länge des mit Montageschlitz versehenen Steges der Länge des Montageschlitzes zuzüglich eines Übermaßes (X) von 10 bis 100 mm. Dadurch ist gewährleistet, dass die spätere Verschweißung des Montageschlitzes im Bereich des aus einem nicht warmezubehandelnden Werkstoff bestehenden Steges erfolgt.

Zweckmäßig ist es, einzelne oder alle Rohre eines Rohrwandregisters an deren Rundnaht-Registerstoß mit einer Rohr-Aufschuhung aus einem Werkstoff auszubilden, der nicht wärmebehandelt werden muss. Durch diese Maßnahme wird erreicht, dass nach der montageseitigen Verschweißung beispielsweise des nahe an die Rohr-Aufschuhung angrenzenden Montageschlitzes im Steg keine nachträgliche Anlasswärmebehandlung an den Rohr-Aufschuhungen vorgenommen werden muss. In vorteilhafter Weise werden die Rohr-Aufschuhungen in unmittelbarer Nachbarschaft zu Montageschlitzen angeordnet und besitzen die Länge der Montageschlitze aufweisenden Stege.

In vorteilhafter Ausgestaltung der Erfindung wird das Aufnahmemittel zur Aufnahme eines durch die Rohrwand hindurchtretenden Rohres als Füllblech ausgebildet, wobei das Füllblech eine Öffnung zwischen zwei Rohren und/oder Stegen und/oder Halbstegen verschließt, die durch das Ausbiegen wenigstens eines Rohres im Rohrwandbereich mit Rohrdurchtritt entsteht, wobei das Füllblech mit den Rohren und/oder mit den Stegen und/oder mit den Halbstegen verschweißt wird. Eine weitere vorteilhafte Ausbildung der Erfindung sieht vor, dass das Aufnahmemittel als Hülse ausgebildet ist und diese entweder innerhalb eines Steges oder innerhalb zweier Halbstege oder innerhalb eines Füllbleches angeordnet und mit diesem verschweißt wird. Die Hülse wird bevorzugt dann eingesetzt, wenn innerhalb des Steges ausreichend Platz zum Anbringen und Verschweißen der Hülse vorhanden ist. Demzufolge wird das Füllblech speziell dann eingesetzt, wenn der Durchtritt des Rohres der Rohrschlange durch die Rohrwand im Bereich des Steges aus räumlichen Gründen schwierig bzw. zu eng wird. Durch diese Maßnahme ist von der Fertigungsseite her ein einfach herzustellender Durchtritt für Rohre von Rohrschlangen durch die Rohrwand erzielbar, die innerhalb der Dampferzeuger-Rohrwände angeordnet sind.

In vorteilhafter Ausbildung der Erfindung werden zusätzlich zu Schritt d) der vorliegenden Erfindung zusätzliche Heizeinrichtungen im Nachbarbereich der im Bereich der Schweißnähte und beidseitig an den Rohrwandregistern angebrachten Heizeinrichtungen eingesetzt. Durch diese zusätzlichen Heizeinrichtungen wird Stützwärme erzeugt zur Reduzierung des bei der Anlasswärmebehandlung auftretenden Temperaturgradienten sowie der aus der Temperaturdifferenz resultierenden Beanspruchung.

In zweckmäßiger Ausbildung der Erfindung wird bei Verwendung eines aus 9-12% chromhaltigem, martensitischem Stahl bestehenden Halbsteges mit aus einem nicht wärmezubehandelnden Werkstoff bestehender Aufpufferung das an den Halbsteg angrenzende Rohr ebenfalls aus demselben Material gewählt, da aus schweiß- und wärmebehandlungstechnischer Sicht dies Sinn macht.

Eine zweckmäßige Ausbildung der Erfindung sieht vor, dass während der Anlasswärmebehandlung der Glühbereich der Rohrwandregister von Kräften entlastet wird mittels Kraftumlenkung des Eigengewichtes durch eine hydraulische oder mechanische Hilfskonstruktion. Dadurch wird eine optimale Wärmebehandlung erzielt.

Vorteilhaft ist es, die Stege und Halbstege an deren rohrangrenzenden Seitenflächen mit Naturwalzkanten von jeweils bis zu 2 mm auszubilden. Dies dient als Grundlage zur Anwendung optimierter Schweißparameter in bezug auf reduzierte Schweißspannungen. Weiter vorteilhaft ist es, die rohrangrenzenden Seitenflächen der Stege und Halbstege im Bereich der Rundnaht-Registerstöße mit einer Anfasung für eine Doppel-HV-Naht auszubilden. Durch diese Maßnahme kann in diesem Bereich ein Vollanschluss, d.h. eine Verschweißung über die komplette Wandstärke des Steges, der Rohr-Steg-Verbindung und damit eine Reduzierung der Kerbwirkung erzielt werden.

Eine weitere vorteilhafte Ausgestaltung der Erfindung sieht vor, dass die Anlasswärmebehandlung bei einer Temperatur von 740 bis 780°C erfolgt sowie in weiterer vorteilhafter Ausbildung der Erfindung die Anlasswärmebehandlung über eine Zeitspanne von 2 min/mm Wandstärke, mindestens jedoch über 60 min erfolgt. Damit wird eine einwandfreie Anlasswarmebehandlung bzw. Glühen der zu warmebehandelnden Bauteile gewährleistet.

Eine weitere vorteilhafte Ausgestaltung der Erfindung sieht vor, dass Montage-Schweißverbindungsstellen von zusätzlichen und überwiegend aus 9-12% chromhaltigem, martensitischem Stahl bestehenden Anschweißteilen (beispielsweise Anschweißbacken) werkstattseitig mit einer aus einem nicht wärmezubehandelnden Werkstoff bestehenden Plattierung und/oder einem aus nicht wärmezubehandelnden Werkstoff bestehendem geschmiedeten oder gewalzten Halbzeug und/oder einer aus einem nicht wärmezubehandelnden Schweißgut bestehenden Auffütterung ausgebildet werden und die Anschweißteile anschließend werkstattseitig mit dem Rohrwandregister verschweißt und zusammen mit dem Rohrwandregister in einer Heizeinrichtung anlasswärmebehandelt werden. Durch diese Maßnahme wird erreicht, dass an den Rohrwänden Anschweißteile mit Anschweißflächen vorhanden sind, an die auf der Baustelle Teile angeschweißt werden können, ohne dass diese Schweißnähte wärmebehandelt werden müssen.

Nachstehend sind Ausführungsbeispiele der Erfindung an Hand der Zeichnungen und der Beschreibung näher erläutert.

Es zeigt:
- Fig. 1: schematisch dargestellt ein planes Rohrwandregister der Dampferzeuger- Rohrwand als Ansicht, wobei das Rohrwandregister werkstattseitig hergestellt wird,
- Fig. 2: Teilschnitt A-A aus Figur 1 als Querschnitt,
- Fig. 3: wie Figur 1, jedoch alternative Ausführung mit Montageschlitz im Steg,
- Fig. 4: wie Figur 1, jedoch alternative Ausführung mit einer in das Rohrwandregister eingesetzten Hülse bzw. alternativ mit einer Öffnung im Füllblech für den Durchtritt eines Rohres einer innerhalb der Rohrwand angeordneten Rohrschlange,
- Fig. 5: wie Figur 2, jedoch alternative Ausführung mit Aufpufferung am Halbsteg,
- Fig. 6: wie Figur 1, wobei das eine Ende des Rohrwandregisters zu einer Ecke gebogen ist, schematisch dargestellt als Draufsicht,
- Fig.7: Eckbogen als Verbindungsteil der planen Rohrwandregister, schematisch dargestellt als Draufsicht,
- Fig. 8: wie Figur 1, jedoch Übergangsstück von schräg berohrter zu vertikal berohrter Rohrwand, schematisch dargestellt als Ansicht,
- Fig. 9: schematisch dargestellt die montageseitige Verbindung der Rohrwandregister an deren Rundnaht-Registerstößen als Ansicht, wobei im oberen Teil der Figur die Verschweißung der Rohrwandregister und im unteren Teil der Figur die Anlasswärmebehandlung der Schweißnähte durch lokal angesetzte und einwirkende Heizeinrichtungen veranschaulicht wird,
- Fig. 10: Teilschnitt B-B aus Figur 9 als Querschnitt,
- Fig. 11: schematisch dargestellt die montageseitige Verbindung der Rohrwandregister an deren Steg-Steg-Registerstößen als Ansicht,
- Fig. 12: Einzelheit "E" aus Figur 11 als Längsschnitt,
- Fig. 13: Teilschnitt C-C aus Figur 11 als Querschnitt,
- Fig. 14: Teilschnitt D-D aus Figur 4 als Querschnitt,
- Fig. 15: Teilschnitt I-I aus Figur 4 als Querschnitt,
- Fig. 16: Seitenansicht des Steges bzw. des Halbsteges (für Rohr-Steg-Verbindung), schematisch dargestellt,
- Fig. 17: Schnitt F-F aus Figur 16 als Querschnitt,
- Fig. 18: Schnitt G-G aus Figur 16 als Querschnitt,
- Fig. 19: Schnitt H-H aus Figur 16 als Querschnitt.

Erfindungsgemäß hergestellte Rohrwände 1 werden vorwiegend in nicht dargestellten Dampferzeugern von mit fossilen Brennstoffen beheizten Kraftwerken eingesetzt. Die Rohrwände 1 umfassen dabei eine in den meisten Fällen rechteckige bzw. quadratische Brennkammer sowie den darüber angeordneten Gaszug, in dem in der Regel aus Rohrschlangen gebildete Heizflächen angeordnet sind. D.h. in der Regel, dass vier Seitenwände als Rohrwände die Brennkammer bzw. den Gaszug des Dampferzeugers umfassen. Die jeweiligen Rohre der Rohrwänden 1, die aus einer verschweißten Rohr-Steg-Rohr Kombination gebildet sind, führen ein durch die Verbrennung des fossilen Brennstoffes erhitztes Arbeitsmedium mit sich und geben es an weitere Prozesse weiter. Je nach Bauweise des Dampferzeuges können die Rohrwände 1 vertikal oder schräg berohrt oder aus einer Kombination aus Schräg- und Vertikalberohrung ausgebildet werden, d.h. die jeweiligen Rohre verlaufen innerhalb der Rohrwand 1 schräg bzw. unter einem Winkel oder vertikal. D.h. weiter, dass je nach Bauweise des Dampferzeugers bzw. der Rohrwand 1 eine unterschiedliche Zusammensetzung der Rohrwandbestandteile aus planen Rohrwandregistern 2, gebogenen Rohrwandregistern 2.1, Übergangs-Rohrwandregistern 2.2 und Eckbögen 28 gegeben sein kann. Bei nur schräg berohrten Rohrwänden 1 entfallen die Übergangs-Rohrwandregister 2.2 an den Übergängen von schräg zu vertikal berohrten Rohrwandbereichen während bei nur vertikal berohrten Rohrwänden 1 zusätzlich die Rohr-Ausbiegungen an den Ecken der Rohrwände 1 entfallen.

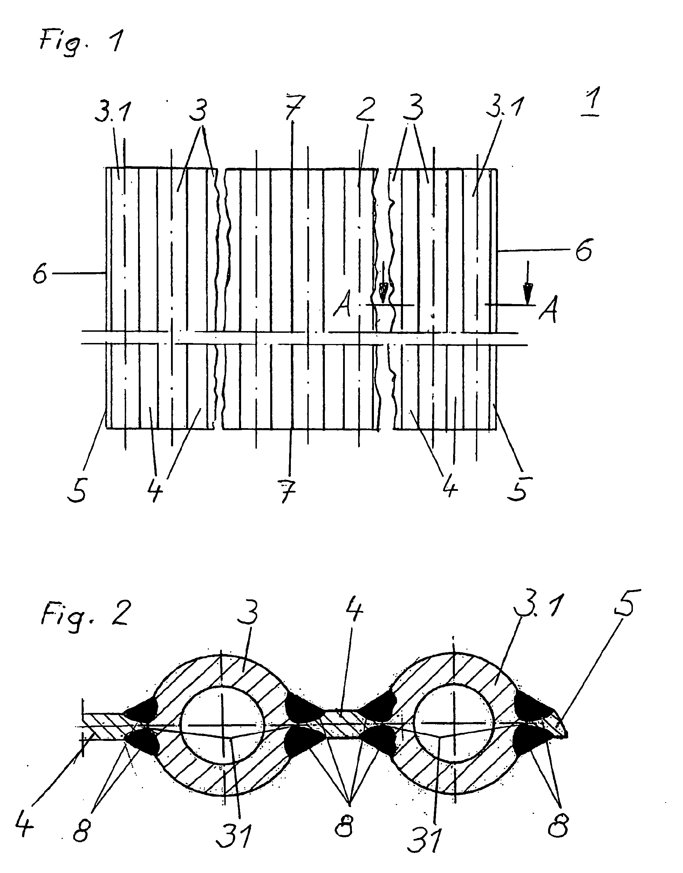

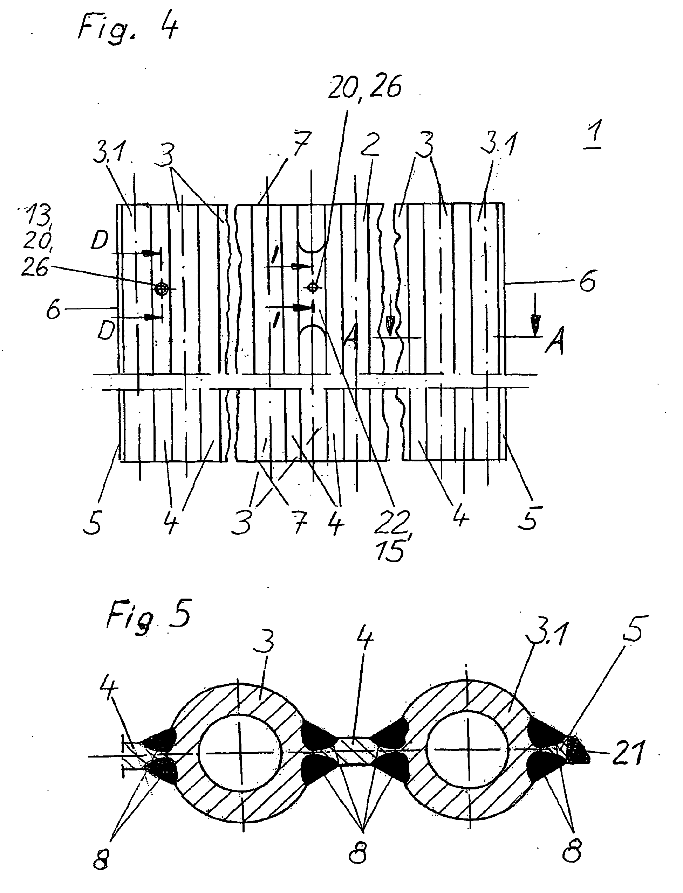

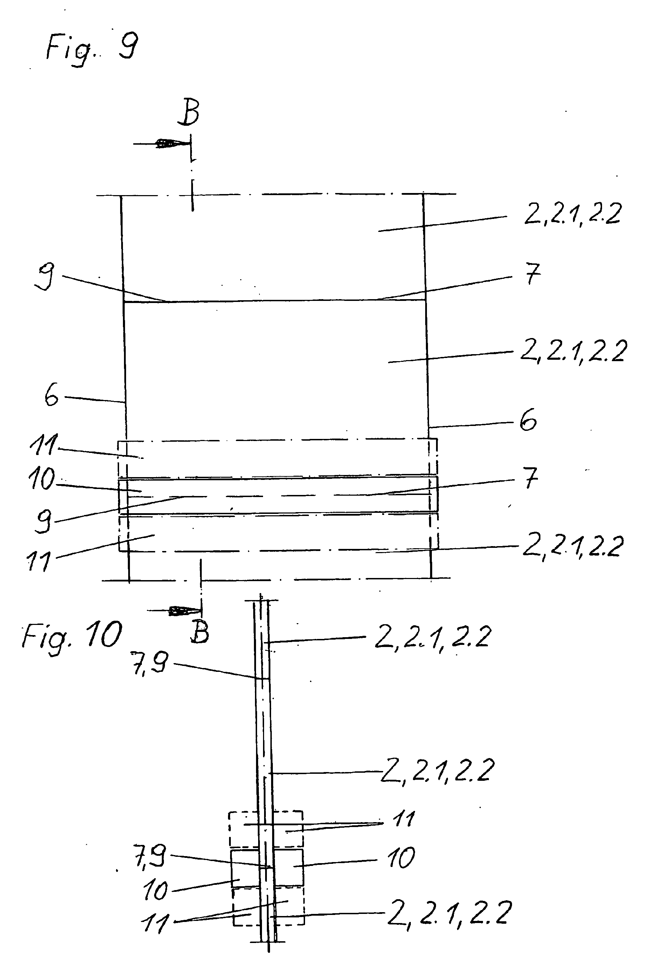

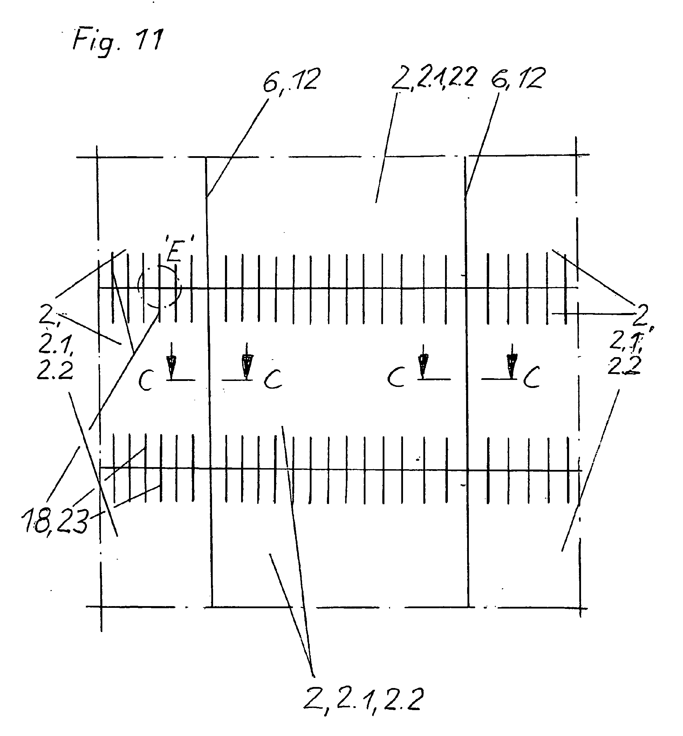

Figur 1 zeigt ein in einer Werkstatt fertig hergestelltes planes Rohrwandregister 2 auf, wobei eine Vielzahl solcher Rohrwandregister 2 zur Herstellung der Rohrwände 1 eines nicht dargestellten Dampferzeugers benötigt werden, indem die Rohrwandregister 2 an deren Steg-Steg- und Rundnaht-Registerstößen 6, 7, die die äußere Umrandung der Rohrwandregister 2 bilden, auf der Baustelle, d.h. montageseitig, miteinander verschweißt werden. Das plane Rohrwandregister 2 kann sowohl für vertikal- wie auch für schrägberohrte Rohrwände 1 eingesetzt werden und kann, wie in Figur 1 dargestellt, rechteckig oder aber je nach Bedarf auch trapezförmig oder andersförmig ausgebildet werden. Es ist aus einer Vielzahl von Rohren 3, 3.1, zwischen den Rohren 3, 3.1 angeordneten Stegen 4 und an den Steg-Steg-Registerstößen 6 (d.h. der Registerstoß bzw. äußere Rand der sich längs bzw. parallel mit den Längsachsen der Rohre 3, 3.1 erstreckt) der Rohrwandregister 2 jeweils mit einem Halbsteg 5 ausgebildet. Die mittleren Rohre 3 sowie die Stege 4 bestehen aus 9-12% chromhaltigen, martensitischen Stählen, vorzugsweise aus dem Werkstoff X10CrWMoVNb9-2 (T92), das jeweils äußerste Rohr 3.1 der beiden Seiten eines planen Rohrwandregisters 2 bestehen aus 9-12% chromhaltigen, martensitischen Stählen oder aus einem nicht wärmezubehandelnden Werkstoff. Die Halbstege 5 bestehen aus einem nicht wärmezubehandelnden Werkstoff oder aus einem 9-12% chromhaltigen martensitischen Stahl, wobei bei letzterem Werkstoff eine aus einem nicht wärmezubehandelnden Werkstoff bestehende Aufpufferung 21 auf die Längsseite der Halbstege 5 aufgebracht wird (siehe Figur 5). Damit werden erfindungsgemäß die Rohrwandregister 2 entlang der Steg-Steg-Registerstöße 6 mit einem nicht wärmezubehandelnden Werkstoff ausgebildet. Sämtliche Rohre 3, 3.1, Stege 4 und Halbstege 5 eines Rohrwandregisters 2 werden mittels Schweißnähte 8 in der Werkstatt zu einem Rohrwandregister 2 verbunden, wobei die Schweißnähte 8 wie in Figur 2 dargestellt als Kehlnähte oder auch in anderer Weise (Doppel HV-Nähte) ausgebildet sein können. Zur Anbringung der werkstattseitigen Schweißnähte 8 und der später montageseitig anzubringenden Schweißnähte 9 und 12 (siehe Figuren 9 und 11) an den Steg-Steg- und Rundnaht- Registerstößen 6, 7 sind entsprechende Anfosungen an den Stirnflächen der Rohre 3, 3.1, Stege 4 und Halbstege 5 vorgesehen. Bei der beispielsweise mittels Auftragschweißung angebrachten Aufpufferung 21 kann gemäß Figur 5 die Anfasung bei deren Auftragung auf der Längsseite der Halbstege 5 gleich mitgebildet werden kann. Eventuell erforderlich werdende Wandöffnungen bzw. Ausbiegungen beispielsweise für Brenneröffnungen, Schauluken und dgl. in der Rohrwand 1 werden bei der Herstellung der jeweiligen Rohrwandregister 2 berücksichtigt, sind jedoch nicht in der Figur 1 veranschaulicht.

Hinsichtlich der Verwendung bzw. des Einsatzes von nicht wärmezubehandelnden Werkstoffen sind Werkstoffe gefragt bzw. gemeint, die nach deren Verschweißen mit den zu verbindenden Bauteilen nicht anlasswärmebehandelt bzw. wärmenachbehandelt werden müssen.

Bezüglich der Wahl der Werkstoffe für die Rohre 3.1 und die Halbstege 5 der Rohrwandregister 2 wird derart verfahren, dass bei Ausführung der Halbstege 5 aus 9-12% chromhaltigem, martensitischem Stahl die angrenzenden Rohre 3.1 vorzugsweise aus demselben Werkstoff bestehen. Bei Ausführung der Halbstege 5 aus einem nicht wärmezubehandelnden Werkstoff können die angrenzenden Rohre 3.1 vorzugsweise aus 9-12% chromhaltigem, martensitischem Stahl sein, vorausgesetzt, dass die Halbstege 5 lang genug sind und der Einfluss der Schweißnaht 8 zwischen Halbsteg 5 und Rohr 3.1 gering ausfällt. Für den Fall, dass die Halbstege 5 sehr kurz sind und damit der Einfluss der Schweißnaht 8 zwischen Halbsteg 5 und Rohr 3.1 groß ausfällt, wird das angrenzende Rohr 3.1 vorzugsweise ebenfalls aus einem nicht wärmezubehandelnden Werkstoff ausgebildet.

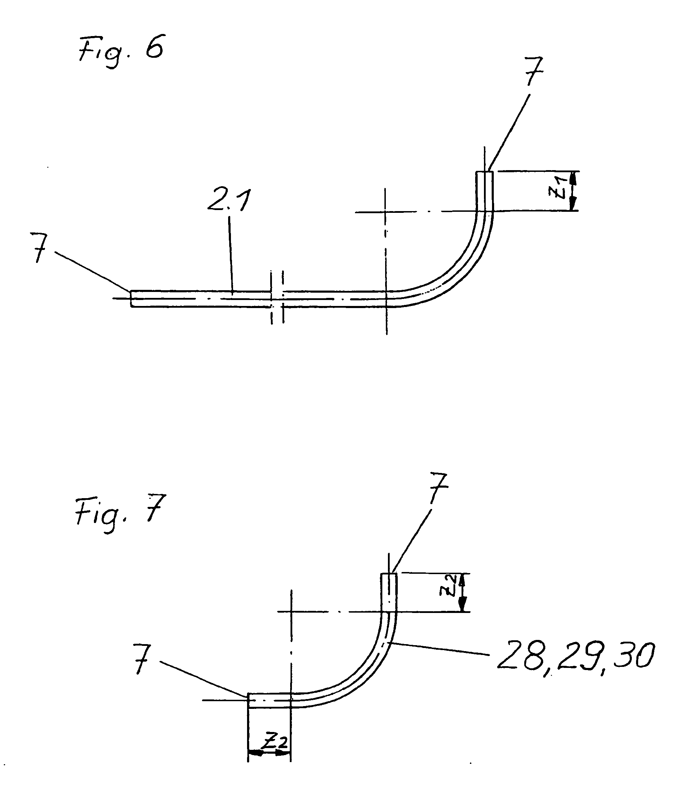

Für den Fall, dass der Dampferzeuger mit schräg berohrten oder mit schräg- und vertikalberohrten Rohrwänden 1 ausgebildet ist, sind für die schrägberohrten Rohrwände 1 Rohrwandregister 2.1 erforderlich, deren Ende gemäß Figur 6 gebogen wird und somit eine Ecke der Rohrwand 1 bildet. Zur Herstellung des Rohrwandregisters 2.1 wird ein wie oben beschrieben hergestelltes und planes Rohrwandregister 2 verwendet und an dessen Ende mittels entsprechender Biegewerkzeuge gebogen, so dass das Ende des Rohrwandregisters 2.1 zu einer Ecke geformt wird. Dabei wird vorzugsweise derart verfahren, dass die Rohre 3, 3.1 sowie die Stege 4 und Halbstege 5 am bogenseitigen Ende des Rohrwandregisters 2.1 zumindest einen kurzen geraden Bereich, d.h. eine definierte Schenkellänge Z₁, aufweisen und die Rohr- bzw. Stegenden somit nicht im Rohrbogen enden. Der gerade Bereich im Rohrauslauf erleichtert später die Verbindung des Rundnaht-Registerstoßes 7 auf der Baustelle. Die Schenkellänge Z₁ kann 0,3 bis mehrere Meter betragen. Des weiteren werden bei gebogenen Rohrwandregistern 2.1 neben Halbstegen 5 aus einem nicht wärmezubehandelnden Werkstoff die daran anliegenden Rohre 3.1 vorzugsweise ebenfalls aus einem nicht wärmezubehandelnden Werkstoff eingesetzt. Dies erleichtert die montageseitige Schweißverarbeitung am Steg-Steg-Registerstoß 6.

Alternativ zur Verwendung von an deren Enden gebogenen Rohrwandregistern 2.1 zur Bildung der Rohrwände 1 können plane Rohrwandregister 2 eingesetzt werden, die bei der bauseitigen Montage der Rohrwände 1 mit Eckbögen 28 an den Ecken der Rohrwände 1 verbunden werden. Dazu werden zeitlich parallel zu den Rohrwandregistern 2 Eckbögen 28 gemäß Figur 7 vorzugsweise einzeln oder als Zwillings-Eckbögen in der Werkstatt gefertigt, wobei jeder der (Zwillings)-Eckbögen 28 einen Verbindungssteg 29 zur späteren montageseitigen Verbindung mit dem benachbarten (Zwillings)-Eckbogen 28 aufweist (entsprechend der Verbindung Rohr 3 und Steg 4), wobei der Verbindungssteg 29 mittels Schweißnaht 30 mit dem (Zwillings)-Eckbogen 28 verbunden wird. Der Einzel- oder Zwillings-Eckbogen 28 sowie der bzw. die daran angeschweißte(n) Verbindungssteg(e) 29 zur Bildung einer Rohr-Steg-RohrVerbindung bestehen aus einem nicht wärmezubehandelnden Werkstoff. Dies ermöglicht eine montageseitige Verbindung der Rohrwandregister 2 mit den Eckbögen 28 sowie Verbindungsstegen 29 mittels Schweißung ohne nachträgliche Anlasswärmebehandlung der Eckbögen 28 und Verbindungsstege 29. Die Entscheidung, ob gebogene Rohrwandregister 2.1 oder plane Rohrwandregister 2 in Verbindung mit Eckbögen 28 eingesetzt werden, muss bzw. kann aus kommerziellen und baulichen Gesichtspunkten getroffen werden. Während sich der Einsatz von gebogenen Rohrwandregistern 2.1 als kostengünstiger erweist kann der Einsatz von planen Rohrwandregistern 2 in Verbindung mit Eckbögen 28 Vorteile in Sachen Kompensation bei maßlichen Ungenauigkeiten im Eckenbereich der Rohrwände 1 verbuchen. Wie auch beim gebogenen Rohrwandregister 2.1 weisen die Eckbögen 28 an ihren Enden zumindest einen kurzen geraden Bereich, d.h. eine definierte Schenkellänge Z₂, auf, wobei die Schenkellänge Z₂ wenigstens einmal den Durchmesser des Eckbogenrohres (in der Regel zwischen 30 - 50 mm) ausmachen soll.

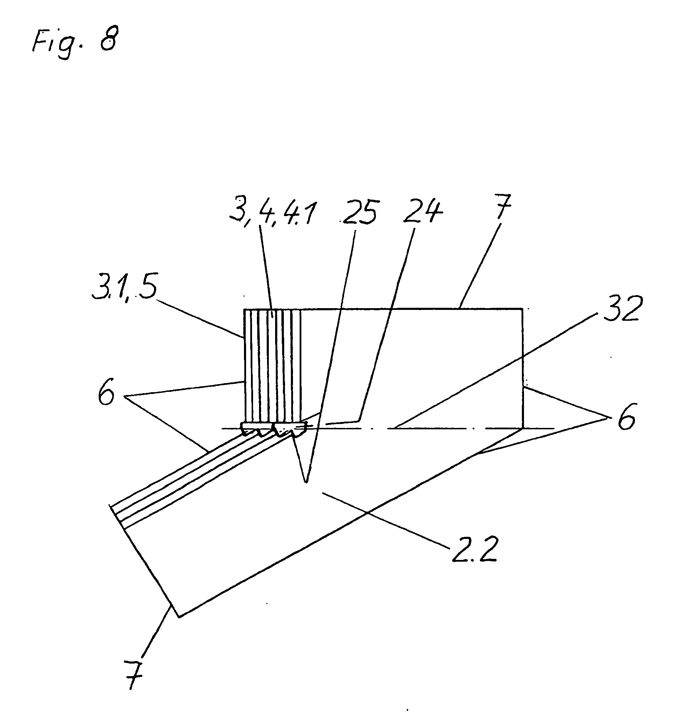

Für Dampferzeuger mit schräg- und vertikalberohrten Rohrwänden 1 werden des weiteren Übergangs-Rohrwandregister 2.2 gemäß Figur 8 benötigt, die den besagten Übergang 32 der unterschiedlich berohrten Rohrwände 1 bewerkstelligen. Dazu werden zwei bereits entsprechend den Maßanforderungen gefertigte bzw. zugeschnittene, plane Rohrwandregister 2 zusammengesetzt, indem die Enden der Rohre 3, 3.1, der Stege 4 und der Halbstege 5 der beiden Rohrwandregister 2 am Übergangsbereich 32 durch Formstücke 24 und mittels Schweißnaht 25 verbunden werden, wobei die Formstücke 24 untereinander ebenfalls verschweißt sind. Wie aus der Figur 8 ersichtlich, beschränkt sich die geometrische Form der Rohrwandregister 2, 2.1, 2.2 nicht auf eine rechteckige Ausbildung (wie in Figuren 1, 3 und 4 dargestellt), sondern kann auf die baulichen Anforderungen der Rohrwand 1 abgestimmt werden. Des weiteren kann die Rohrteilung der schräg berohrten im Vergleich mit der vertikal berohrten Rohrwand 1 unterschiedlich sein, so dass beispielsweise auf ein Rohr 3, 3.1 im schräg berohrten Teil zwei Rohre 3, 3.1 im vertikal berohrten Teil der Rohrwand 1 kommen.

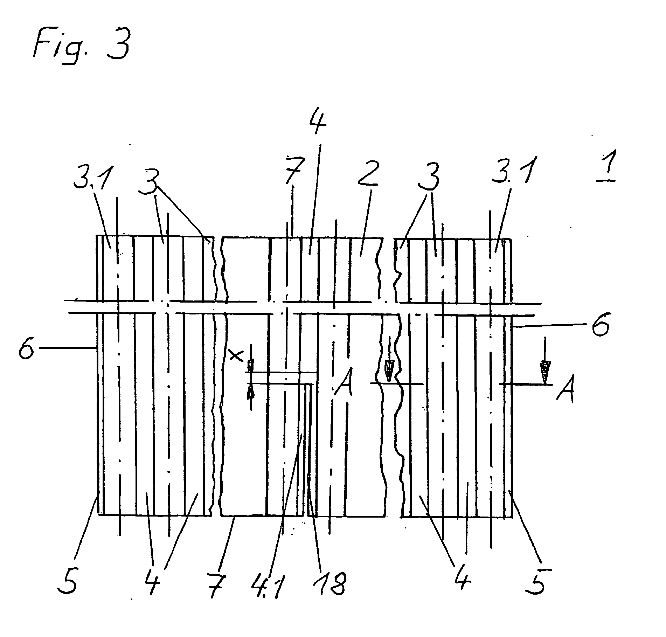

Um Maßungenauigkeiten hinsichtlich Teilungsunterschieden an den Rohrwandregistern 2, 2.1, 2.2 beim späteren montageseitigen Zusammensetzen bzw. Verschweißen der Rundnaht-Registerstöße 7 der Rohrwandregister 2, 2.1, 2.2 sowie Wärmedehnungen bei der örtlichen Wärmebehandlung auf der Baustelle kompensieren zu können, kann an wenigstens einem der Stege 4 eines Rohrwandregisters 2, 2.1, 2.2 über einen Teilbereich seiner länglichen Erstreckung und ausgehend entweder von einem Ende des Steges 4 oder von beiden Enden des Steges 4 einen in Längsrichtung des Steges 4 ausgebildeten länglichen Montageschlitz 18 mit definierter Länge (beispielsweise 0,3 bis 1,0 m) und definierter Schlitzbreite (beispielsweise 3 bis 6 mm) angeordnet sein. Figur 3 zeigt einen Montageschlitz 18 auf, der nur von einem Ende des Steges 4, d.h. von einem der beiden Rundnaht-Registerstöße 7, ausgeht. Dabei wird der aus 9-12% chromhaltigem, martensitischem Stahl bestehende Steg 4 im Bereich des Montageschlitzes 18 durch einen aus einem nicht wärmezubehandelnden Werkstoff bestehenden Steg 4.1 ersetzt, wobei die Länge des Steges 4.1 der Länge des Montageschlitzes 18 zusätzlich eines Übermaßes X von 10 - 100 mm entsprechen kann. Durch die Verwendung des aus einem nicht wärmezubehandelnden Werkstoff bestehender Steges 4.1 wird es ermöglicht, den Montageschlitz 18 nach dem Anpassen und montageseitigen Verschweißen der Rohrwandregister 2, 2.1, 2.2 mittels Schweißnaht 23 zu verschließen bzw. zu füllen, ohne diese Schweißnaht 23 nachträglich wärmebehandeln zu müssen. Figur 11 zeigt mehrere zusammengeschweißte Rohrwandregister 2, 2.1, 2.2 auf, die mit einer Vielzahl von derartigen Montogeschlitzen 18 ausgebildet sind. Beispielsweise kann jeder dritte, zweite oder jeder Steg 4 mit einem Montageschlitz 18 und somit einem Steg 4.1 ausgebildet sein. Ferner zeigt Figur 11 beispielhaft Rohrwandregister 2, 2.1, 2.2 auf, die an beiden Enden der Stege 4 eines jeweiligen Rohrwandregisters 2, 2.1, 2.2, d.h. an beiden Rundnaht-Registerstößen 7, mit Montageschlitzen 18 und somit mit Stegen 4.1 ausgebildet sind.

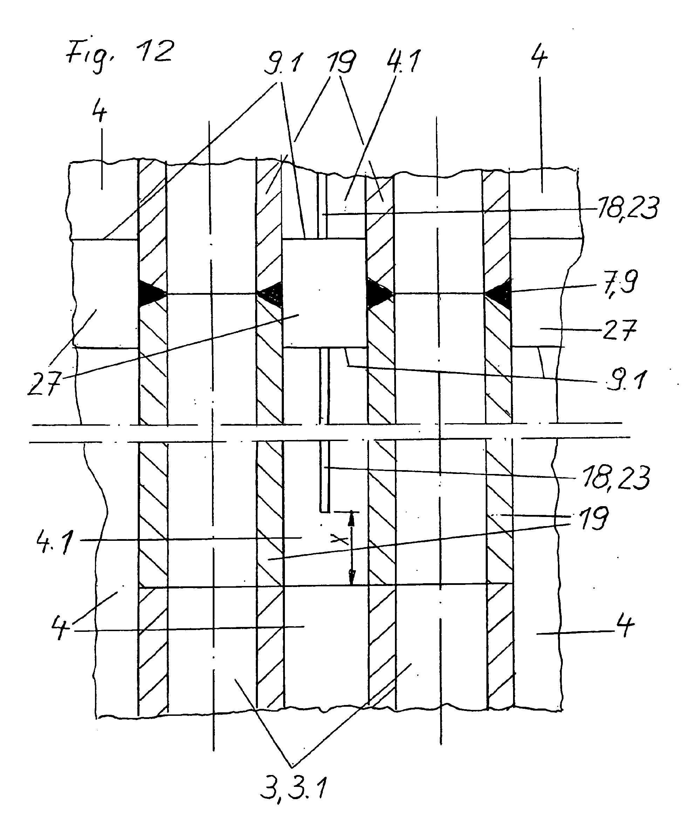

Das spätere montageseitige Verschließen der Montageschlitze 18 mittels Schweißnähte 23 kann, insbesondere bei schmalen Stegen 4.1, dazu führen, dass die an den Steg 4.1 angrenzenden und aus 9-12% chromhaltigem, martensitischem Stahl bestehenden Rohre 3, 3.1 anschließend wärmebehandelt werden müssen. Diese eventuell erforderlich werdende Wärmebehandlung kann vermieden werden, indem im Bereich des Montageschlitzes 18 bzw. des Steges 4.1 die jeweils angrenzenden Rohre 3, 3.1 gemäß Fig. 12 mit einem nicht wärmezubehandetnden Werkstoff aufgeschuht werden. D.h., dass im Bereich des Montageschlitzes 18 bzw. des Steges 4.1 die Enden der aus 9-12% chromhaltigem, martensitischem Stahl bestehenden Rohre 3, 3.1 ersetzt werden durch aus nicht wärmezubehandelnden Werkstoff bestehenden Rohr-Aufschuhungen 19. Die Länge der Rohr-Aufschuhungen 19 werden dabei vorzugsweise der Länge der Stege 4.1 angepasst.

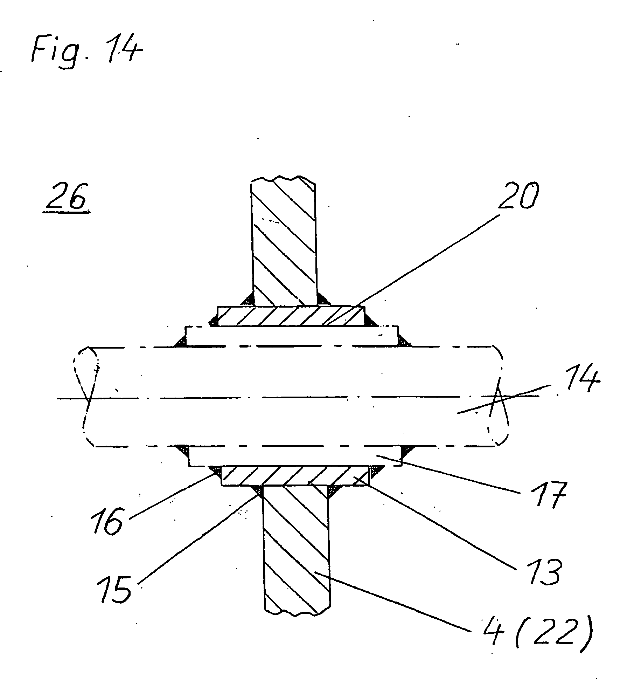

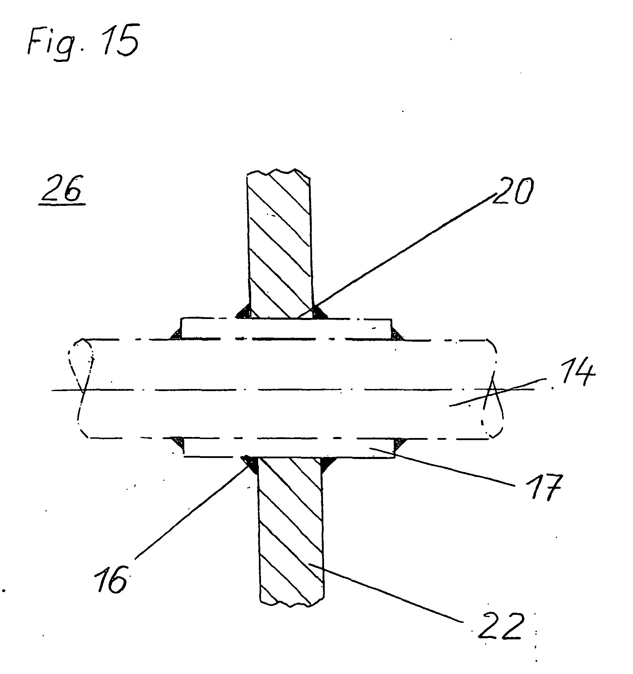

An Bereichen 26 der Dampferzeuger-Rohrwände 1, an denen Rohre 14 von innerhalb der Rohrwände 1 angeordneten und nicht dargestellten Rohrschlangen bzw. Heizflächen gemäß der Figuren 4, 14 und 15 durch die Rohrwand 1 hindurchgeführt werden bzw. hindurchtreten, werden innerhalb der Rohrwandregister 2, 2.1, 2.2 Aufnahmemittel, die jeweils eine zum Durchtritt des Rohres 14 geeignete Durchtrittsöffnung 20 aufweisen und die aus einem nicht wärmezubehandelnden Werkstoff bestehen, zur Aufnahme und zum Hindurchführen des Rohres 14 vorgesehen. Als Aufnahmemittel kann ein Füllblech 22 oder eine Hülse 13 dienen. Die Hülse 13 kommt in der Regel dann zum Einsatz, wenn der Steg 4 bzw. die beiden Halbstege 5 zwischen den Rohren 3, 3.1 ausreichend breit ist, um eine Hülse 13 aufzunehmen und im Steg 4 bzw. Halbstegen 5 mittels Schweißnaht 15 verschweißen zu können (siehe Figur 14). In den Fällen, in denen der Steg 4 zu schmal ist, wird beispielsweise ein Rohr 3, 3.1 aus der Registerebene herausgebogen und der entstehende Freiraum mit einem Füllblech 22 gefüllt und mit den angrenzenden Rohren 3, 3.1 und/oder Stegen 4 und/oder Halbstegen 5 mittels Schweißnaht 15 verschweißt (siehe Figur 4 und 15). Je nach geometrischer Anordnung der Bereiche 26 an den Rohrwänden 1, in denen die Rohre 14 einschließlich deren Hülsen 17 durch die Rohrwände 1 hindurchtreten, kann es sein, dass ein Rohrwandregister 2, 2.1, 2.2 keinen, einen oder mehrere Bereiche 26 mit Rohrdurchtritten aufweist. Die Abstande der durch die Rohrwände 1 hindurchgeführten Rohre 14 zueinander entspricht in der Regel dem Vielfachen der Rohrteilung innerhalb der Rohrwände 1, d.h. die Rohrdurchtritte fallen in der Regel konstruktiv gleich aus. Es ist ferner möglich, in das als Aufnahmemittel vorgesehene Füllblech 22 zusätzlich eine Hülse 13 zur Aufnahme des Rohres 14 einzusetzen und mittels Schweißnaht 15 miteinander zu verbinden. Siehe hierzu Figur 14, wobei hier die Hülse 13 nicht im Steg 4, sondern im Füllblech 22 (siehe 22 in Klammer) angeordnet wird.

Nach der Herstellung bzw. Fertigstellung der Rohrwandregister 2, 2.1, 2.2 in der Werkstatt (werkstattseitig) werden ebenfalls in der Werkstatt im nächsten Verfahrensschritt die Schweißnähte 8, 15, 21 und 25 sämtlicher Rohrwandregister 2, 2.1, 2.2 in einer nicht dargestellten ersten Heizeinrichtung anlasswärmebehandelt. Als erste Heizeinrichtung wird in der Regel ein aufgrund der Abmessungen der Rohrwandregister 2, 2.1, 2.2 hierfür angepasster Ofen benutzt, in dem die Rohrwandregister 2, 2.1, 2.2 einzeln oder zu mehreren wärmebehandelt werden. Damit ist erfindungsgemäß dafür gesorgt, dass ein erheblicher Teil der an den Rohrwandregistern anzubringenden Schweißnähte bereits werkstattseitig anlasswärmebehandelt wird und es somit diesbezüglich auf der Baustelle montageseitig keines weiteren Aufwandes mehr bedarf. Die obige Auflistung führt sämtliche mögliche Rohrwandregister bzw. sämtliche möglichen Schweißnähte für die Wärmebehandlung auf. Wie bereits angeführt, kann je nach Ausbildung der Dampferzeuger und somit auch der Rohrwände 1 nur eine Form der Rohrwandregister und deren Schweißnähte zur Anwendung kommen. Die Anlasswärmebehandlung der Schweißnähte 8, 15, 21 und 25 innerhalb der ersten Heizeinrichtung wird vorteilhaft bei einer Temperatur von 740° bis 780° C und weiter vorteilhaft über eine Zeitspanne von 2 min/mm Wandstärke, mindestens jedoch über 60 min vorgenommen.

Nach Fertigstellung dieses Verfahrensschrittes können die Rohrwandregister 2, 2.1, 2.2 auf die Baustelle zur Errichtung der Rohrwände 1 eines zu erstellenden und nicht dargestellten Dampferzeugers gebracht werden. Dazu werden im nächsten Verfahrensschritt die Rohrwandregister 2, 2.1, 2.2 auf der Baustelle, d.h. montageseitig, an ihren Rundnaht-Registerstößen 7 mittels Schweißnähte 9 verbunden (Figuren 9, 10 und 12 zeigen die Verbindung zweier Rohrwandregister 2, 2.1, 2.2). Zum Anbringen der Rund-Schweißnähte 9 sind gemäß der Figur 12 die Stege 4, 4.1 sowie die Halbstege 5 werkstattseitig etwas kürzer als die Rohre 3, 3.1 ausgebildet, so dass ein Freiraum zum Fertigen der Rund-Schweißnähte 9 an den Rohren 3, 3.1 entsteht. Nach dem Anbringen der Rund-Schweißnähte 9 werden Füllbleche 27 in den Freiraum eingesetzt und mittels Schweißnaht 9.1 mit den Rohren 3, 3.1 sowie den Stegen 4, 4.1 bzw. Halbstegen 5 verbunden. Werden anstelle der gebogenen Rohrwandregister 2.1 Eckbögen 28 für die Bildung der Ecken in schrägberohrten Rohrwänden 1 verwendet, so werden nunmehr die Eckbögen 28 einschließlich deren Verbindungsstege 29 mit den planen Rohrwandregistern 2 mittels Schweißnähte 9, 9.1 verbunden.

Im Anschluss an diesen Verfahrensschritt erfolgt der nächste Verfahrensschritt auf der Baustelle, bei dem die Schweißnähte 9, 9.1 mittels im Bereich der Schweißnähte 9, 9.1, d.h. lokal, und beidseitig an den Rohrwandregistern 2, 2.1, 2.2 angebrachten zweiten Heizeinrichtungen 10 anlasswärmebehandelt werden, siehe hierzu den unteren Bereich der Figuren 9 und 10. Die Größe des Anlass- bzw. Glühbereiches und einzelne Anlassparameter werden entsprechend den Anforderungen vorab festgelegt, d.h. der Wärmeeinbringbereich, die Aufheiz- und Abkühlgradienten werden vorab exakt definiert. Abhängig von konstruktiven und geometrischen Bedingungen können zusätzliche dritte Heizeinrichtungen 11 im Nachbarbereich der zweiten Heizeinrichtung 10 eingesetzt werden, die eine Stützwärme erzeugen zur Reduzierung des Temperaturgradienten und der aus der Temperaturdifferenz resultierenden Beanspruchung. Bei der zweiten wie auch bei der dritten Heizeinrichtung 10, 11 kann es sich um geometrisch angepasste Widerstands-Glühkassetten handeln, die erforderlichenfalls auch den Bereich der Schweißnaht 23 nach dem Verschließen der Montageschlitze 18 abdecken und damit wärmebehandeln. Der Glühbereich für eine Wärmebehandlung kann sich über die gesamte Rohrwandregisterbreite bzw. über definierte Bereiche der Registerbreite bzw. einzelne Rundnahtbereiche bzw. einzelne Montogeschlitzbereiche erstrecken. Wie bei der Anlasswärmebehandlung der Schweißnähte 8, 15, 21 und 25 in der Werkstatt wird auch hier die Anlasswärmebehandlung vorteilhaft bei einer Temperatur von 740° bis 780° C und weiter vorteilhaft über eine Zeitspanne von 2 min/mm Wandstärke, mindestens jedoch über 60 min vorgenommen.

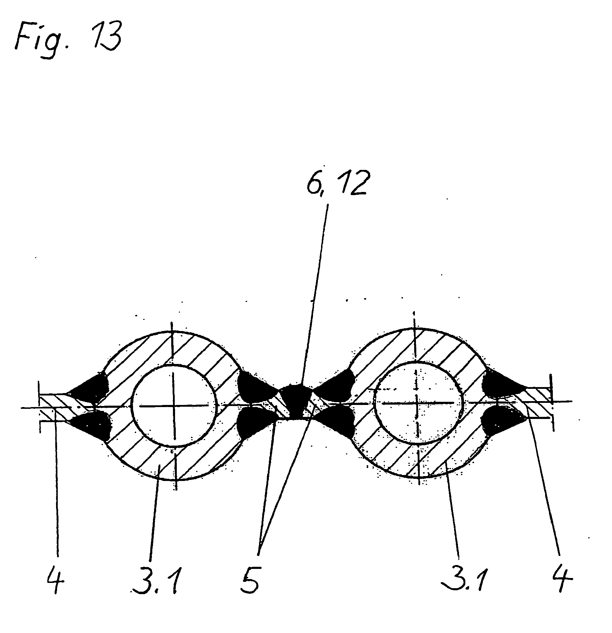

Nach der bauseitigen Anlasswärmebehandlung der Schweißnähte 9, 9.1 und ggf. 23 werden im nächsten Verfahrensschritt die Rohrwandregister 2, 2.1, 2.2 (Figuren 11 und 13 zeigen die Verbindung mehrerer Rohrwandregister 2, 2.1, 2.2) an deren Steg-Steg-Registerstößen 6 mittels Schweißnähte 12 zu kompletten Rohrwänden 1 verbunden. Eine Anlasswärmebehandlung der Schweißnähte 12 ist durch den erfindungsgemäßen Aufbau der einzelnen Bestandteile der Rohrwandregister 2, 2.1, 2.2 nicht erforderlich.

Nach dem montageseitigen Zusammenbau der Rohrwände 1 können die Rohre 14 der innerhalb der Rohrwände 1 angeordneten und nicht abgebildeten Rohrschlangen durch die in den Rohrwänden 1 vorgesehenen Aufnahmemittel, als da sind Hülsen 13 oder Füllbleche 22 hindurchgeführt und mit diesen gemäß Figur 14 oder 15 mittels Schweißung verbunden werden. Dazu werden die vorbereiteten Rohre 14, die eine aus einem nicht wärmezubehandelnden Werkstoff bestehende und im Durchtrittsbereich der Rohrwand 1 mit dem Rohr 14 verschweißte Hülse 17 aufweist bzw. damit vorbereitet ist, in die Hülse 13 oder in das Füllblech 22 eingeführt, so dass die Hülse 13 oder das Füllblech 22 und die Hülse 1 7 eine Verbindungsstelle bilden. Anschließend werden die beiden Hülsen 13 und 17 bzw. das Füllblech 22 und die Hülse 17 mittels Schweißnaht 16 montageseitig verbunden. Eine nachfolgende Anlasswärmebehandlung der Schweißnaht 16 ist wegen der erfindungsgemäßen Ausführung der Verbindungsstelle nicht erforderlich.

Um auf der Baustelle die Möglichkeit zu haben, entsprechend benötigte Bauteile an die Rohrwand 1 des Dampferzeugers anschweißen zu können, ohne anschließend eine Anlasswärmebehandlung durchführen zu müssen, können entsprechende Vorkehrungen geschaffen werden. Dazu werden die Montage-Schweißverbindungsstellen, d.h. die Stellen, an denen auf der Baustelle andere Bauteile angeschweißt werden, von nicht dargestellten und überwiegend aus 9-12% chromhaltigem, martensitischem Stahl bestehenden Anschweißteilen, beispielsweise Anschweißbacken, werkstattseitig mit einer aus einem nicht wärmezubehandeinden Werkstoff bestehenden Plattierung und/oder einem aus nicht wärmezubehandelnden Werkstoff bestehenden geschmiedeten oder gewalzten Halbzeug und/oder einer aus einem nicht wärmezubehandelnden Schweißgut bestehenden Auffütterung ausgebildet und die Anschweißteile werden anschließend werkstattseitig mit dem Rohrwandregister 2, 2.1, 2.2 verschweißt und anschließend in der ersten Heizeinrichtung anlasswärmebehandelt.

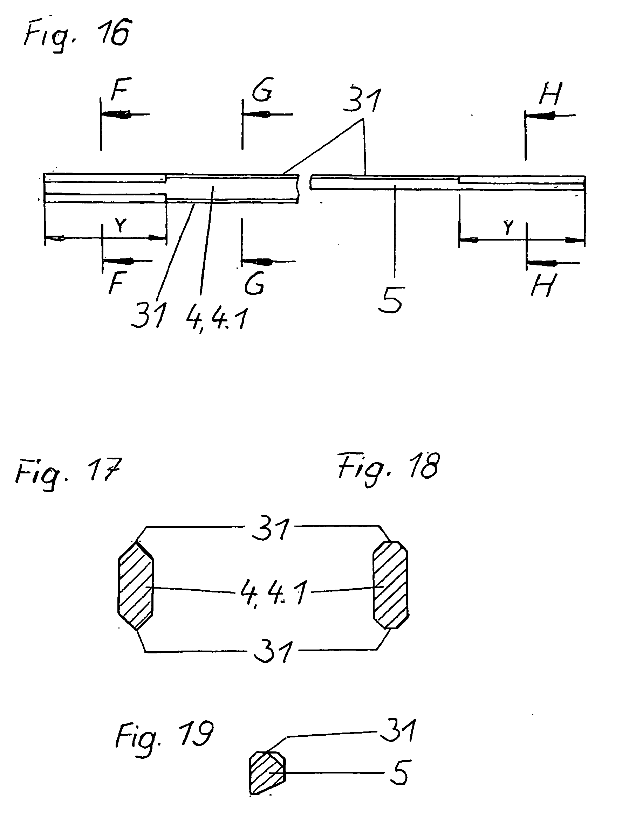

Gemäß der Figuren 16 und 18 sind die rohrangrenzenden Seitenflächen 31 der Stege 4, 4.1 und Halbstege 5 mit Naturwalzkanten von jeweils bis zu 2 mm ausgebildet (siehe Figur 18). Dies dient zur Limitierung des Restspaltes der Verschweißung zwischen Rohr 3, 3.1 und Steg 4, 4.1 bzw. Halbsteg 5 sowie als Grundlage zur Anwendung optimierter Schweißparameter in bezug auf reduzierte Schweißspannungen. Ferner können gemäß der Figuren 16, 17 und 19 die rohrangrenzenden Seitenflächen 31 der Stege 4, 4.1 und Halbstege 5 im Bereich der örtlichen Wärmebehandlung der Rundnaht-Registerstöße 7 mit einer Anfasung für eine Doppel-HV-Naht ausgebildet werden, so dass werkstattseitig die Verbindung Rohr-Steg als Vollanschluss erfolgen kann. Der Bereich Y der Anfasung für eine Doppel-HV-Naht kann zwischen 20 und 200 mm betragen.

Für die Rohre 3, 3.1, Stege 4, Halbstege 5, Formstücke 24 und Füllbleche 27 aus 9-12% chromhaltigem, martensitischem Stahl wird vorzugsweise der Werkstoff X10CrWMoVNb9-2 (T92) eingesetzt. Alternativ dazu kann der Werkstoff VM12-SHC (Werksbezeichnung der Fa. Vallourec-Mannesmann) eingesetzt werden. Für die aus einem nicht wärmezubehandelnden Werkstoff bestehenden Bauteile der Rohrwandregister 2, 2.1, 2.2 wird vorzugsweise Alloy 617 (NiCr23Co12Mo) oder Alloy 617mod. (NiCr23Co12Mo mod.) eingesetzt. Für die Aufnahmemittel 13, 22 können alternativ dazu auch entsprechende hitzebeständige austenitische Werkstoffe eingesetzt werden.

Die Füllschweißungen im Bereich der montageseitigen Rundnaht-Registerstöße 7 (Schweißnähte 9.1) und der Montageschlitze 18 (Schweißnähte 23) werden bevorzugt mittels WIG-Verfahren ausgeführt.

Zur Reduzierung von Spannungen und Verwerfungen können die maschinell und werkstattseitig ausgeführten UP-Schweißverbindungen der Rohre 3, 3.1 mit den Stegen 4, 4.1 bzw. Halbstegen 5 vorgewärmt werden.

Um das Auftreten von Rissen während der Herstellung und Verarbeitung der Rohrwandregister 2, 2.1, 2.2 in der Werkstatt auszuschließen, können Zwischenglühungen vor der Komplettierung mit anschließender Endwärmebehandlung der Rohrwandregister 2, 2.1, 2.2 vorgenommen werden.

Um den Glühbereich der Rohrwandregister 2, 2.1, 2.2 während der Anlasswärmebehandlung von Kräften zu entlasten kann jeweils bezogen auf den Anwendungsfall mittels hydraulischer oder mechanischer Hilfskonstruktionen eine Kraftumlenkung des Eigengewichts erfolgen.

Für das Verschweißen der aus 9-12% chromhaltigen, martensitischen Stählen bestehenden Rohre 3, 3.1, Stege 4, Halbstege 5 Formstücke 24 und Füllbleche 27 untereinander wird vorzugsweise ein artgleicher Schweißzusatzwerkstoff verwendet.

Für das Verschweißen der aus nicht wärmezubehandelnden Werkstoff bestehenden Rohre 3.1, Stege 4.1, Halbstege 5, Hülsen 13, Füllbleche 22, Eckbögen 28, Verbindungsstege 29 an Eckbögen 28 und Aufpufferungen 21 untereinander wird vorzugsweise ein artgleicher Schweißzusatzwerkstoff verwendet.

Für das Verschweißen der aus 9-12% chromhaltigen, martensitischen Stählen bestehenden Rohre 3, 3.1, Stege 4, Halbstege 5, Formstücke 24 und Füllbleche 27 mit den aus einem nicht wärmezubehandelnden Werkstoff bestehenden Rohren 3.1 und/oder Stegen 4.1 und/oder Halbstegen 5 und/oder Hülsen 13 und/oder Füllblechen 22 und/oder Eckbögen 28 und/oder Verbindungsstege 29 an Eckbögen 28 und/oder Aufpufferungen 21 wird vorzugsweise ein nicht wärmezubehandelnder Schweißzusattwerkstoff verwendet.

### Bezugszeichenliste:

- 1: Rohrwand
- 2: Rohrwandregister
- 2.1: Rohrwandregister
- 2.2: Rohrwandregister
- 3: Rohr
- 3.1: Rohr
- 4: Steg
- 4.1: Steg
- 5: Halbsteg
- 6: Steg-Steg-Registerstoß
- 7: Rundnaht-Registerstoß
- 8: Schweißnaht, werkstattseitig
- 9: Schweißnaht, montageseitig
- 9.1: Schweißnaht, montageseitig
- 10: Zweite Heizeinrichtung
- 11: Dritte Heizeinrichtung
- 12: Schweißnaht, montageseitig
- 13: Hülse
- 14: Rohr einer Rohrschlange
- 15: Schweißnaht, werkstattseitig
- 16: Schweißnaht, montageseitig
- 17: Hülse
- 18: Montageschlitz
- 19: Rohr-Aufschuhung
- 20: Durchtrittsöffnung
- 21: Aufpufferung
- 22: Füllblech am Rohrdurchtritt
- 23: Schweißnaht, montageseitig (Verschließen Montageschlitz)
- 24: Formstück
- 25: Schweißnaht, werkstattseitig

- 26: Rohrwandbereich mit Rohrdurchtritt
- 27: Füllblech am Rundnaht-Registerstoß
- 28: Eckbogen
- 29: Verbindungssteg am Eckbogen
- 30: Schweißnaht, werkstattseitig
- 31: Rohrangrenzende Seitenfläche der Stege und Halbstege
- 32: Übergang zwischen schräg und vertikal verlaufenden Rohren der Rohrwand

## Patentansprüche

1. Verfahren zur Herstellung von Dampferzeuger-Rohrwänden bestehend aus überwiegend 9-12% chromhaltigen, martensitischen Stählen, wobei die Rohrwände ( 1 ) aus einer Rohr-Steg-Rohr-Kombination gebildet und aus einer Vielzahl von wenigstens einen der Rohrwandbestandteile aus planen Rohrwandregistern (2), gebogenen Rohrwandregistern ( 2.1 ), Übergangs-Rohrwondregistern ( 2.2 ) und Eckbögen ( 28 ) zusammengesetzt sind und mit jeweils einer Durchtrittsöffnung (20) ausgebildeten Aufnahmemittel ( 13, 22 ) an Rohrwand-Bereichen ( 26 ) ausgebildet sind, an denen Rohre ( 14 ) durch die Rohrwand ( 1 ) hindurchgeführt sind und die Rohrwandregister ( 2, 2.1, 2.2 ) an deren Peripherie längsseitig Steg-Steg-Registerstöße ( 6 ) und querseitig Rundnaht-Registerstöße ( 7 ) aufweisen und das Verfahren die folgenden Schritte umfasst,
a) Herstellung der planen und/oder gebogenen und/oder Übergangs-Rohrwandregister ( 2, 2.1, 2.2 ) und/oder Eckbögen ( 28 ) werkstattseitig durch Verbinden der Rohre ( 3, 3.1 ), Stege ( 4 ) und der Halbstege ( 5 ) mittels Schweißnähte ( 8 ) sowie der Aufnahmemittel ( 13, 22 ) mittels Schweißnähte (15) zu Rohrwandregistern ( 2, 2.1, 2.2 ), wobei die Übergangs-Rohrwandregister ( 2.2 ) mit Formstücken ( 24 ) ausgebildet sind, die am Übergang ( 32 ) mit den Enden der schräg und der vertikal verlaufenden Rohre ( 3, 3.1 ) mittels Schweißnaht ( 25 ) verbunden sind und durch Verbinden des Eckbogens ( 28 ) mit einem Verbindungssteg ( 29 ) mittels Schweißnaht ( 30 ) und wobei
die mittleren Rohre ( 3 ) und die Stege ( 4 ) aus einem 9-12% chromhaltigen, martensitischen Stahl und das jeweils äußerste Rohr ( 3.1 ) der beiden Seiten eines Rohrwandregisters ( 2, 2.1, 2.2 ) aus einem 9-12% chromhaltigen, martensitischen Stahl oder aus einem nicht wärmezubehandelnden Werkstoff bestehen,
die an den Steg-Steg-Registerstößen ( 6 ) angeordneten Halbstege ( 5 ) aus einem nicht wärmezubehandelnden Werkstoff bestehen oder aus einem 9-12% chromhaltigen, martensitischen Stahl bestehen und auf diesen entlang der beiden Steg-Steg-Registerstöße ( 6 ) eine aus einem Werkstoff bestehende Aufpufferung ( 21 ) aufgebracht wird, die keiner Anlasswärmebehandlung bedarf,
die Aufnahmemittel ( 13, 22 ) aus einem nicht wärmezubehandelnden Werkstoff bestehen,
die Eckbögen ( 28 ) mit Verbindungsstegen ( 29 ) aus einem nicht wärmezubehandelnden Werkstoff bestehen und
wobei die Formstücke ( 24 ) aus einem 9-12% chromhaltigen, martensitischen Stahl oder aus einem nicht wärmezubehandelnden Werkstoff bestehen,
b) Anlasswärmebehandlung der Schweißnähte ( 8, 15, 21, 25 ) der hergestellten Rohrwandregister ( 2, 2.1, 2.2 ) mittels einer ersten Heizeinrichtung werkstattseitig,
c) Verbinden der planen und/oder gebogenen und/oder Übergangs-Rohrwandregister ( 2, 2.1, 2.2 ) und/oder Eckbögen ( 28 ) an deren Rundnaht-Registerstößen ( 7 ) unter Einsetzung von Füllblechen ( 27 ) mittels Schweißnähte ( 9, 9.1 ) montageseitig, wobei die Füllbleche ( 27 ) aus einem 9-12% chromhaltigen, martensitischen Stahl bestehen,
d) Anlasswärmebehandlung der Schweißnähte ( 9, 9.1 ) an den Rundnaht-Registerstößen ( 7 ) der Rohrwandregister ( 2, 2.1, 2.2 ) und/oder Eckbögen ( 28 ) mittels im Bereich der Schweißnähte ( 9, 9.1 ) und beidseitig an den Rohrwandregistern ( 2, 2.1, 2.2 ) angebrachte zweite Heizeinrichtungen ( 10 ) montageseitig,
e) Verbinden der planen und/oder gebogenen und/oder Übergangs-Rohrwandregister ( 2, 2.1, 2.2 ) und/oder Eckbögen ( 28 ) an deren Steg-Steg-Registerstößen ( 6 ) mittels Schweißnähte ( 12 ) montageseitig ohne nachfolgende Anlasswärmebehandlung dieser Schweißnähte ( 12 ),
f) Hindurchführen der mit aufgesetzten Hülsen ( 17 ) vorbereiteten Rohre ( 14 ) durch die jeweiligen Aufnahmemittel ( 13, 22 ) der Rohrwände ( 1 ), wobei die aus einem nicht wärmezubehandelnden Werkstoff vorbereiteten Hülsen ( 17 ) jeweils im Durchtrittsbereich der Rohrwand ( 1 ) angeordnet und mit dem Rohr ( 14 ) verbunden sind, und Verbinden der Hülse ( 17 ) mit dem Aufnahmemittel ( 13, 22 ) mittels Schweißnaht ( 16 ) montageseitig ohne nachfolgende Anlasswärmebehandlung dieser Schweißnähte (16).

2. Verfahren nach Anspruch 1, **dadurch gekennzeichnet, dass** die Eckbögen ( 28 ) als Einzel- oder Zwillingsbogen ausgebildet sind.

3. Verfahren nach Anspruch 1, **dadurch gekennzeichnet, dass** zusätzlich zu Schritt a) wenigstens einer der Stege ( 4 ) eines Rohrwandregisters ( 2, 2.1, 2.2 ) über einen Teilbereich seiner länglichen Erstreckung und ausgehend entweder von einem Ende des Steges ( 4 ) oder von beiden Enden des Steges ( 4 ) einen in Längsrichtung des Steges ( 4 ) ausgebildeten Montageschlitz ( 18 ) für den Ausgleich von Maßungenauigkeiten aufweist und dass der aus 9-12% chromhaltigem, martensitischem Stahl bestehende Steg ( 4 ) im Bereich des Montageschlitzes ( 18 ) durch einen aus einem Werkstoff bestehenden Steg ( 4.1 ) ersetzt wird, der nicht wärmenachbehandelt werden muss.

4. Verfahren nach Anspruch 3, **dadurch gekennzeichnet, dass** zusätzlich zu Schritt c) des Anspruches 1 die Montageschlitze ( 18 ) nach dem Ausgleich von Maßungenauigkeiten an den Rohrwandregistern ( 2, 2.1, 2.2 ) montageseitig mittels Schweißnähte ( 23 ) verschlossen werden.

5. Verfahren nach Anspruch 4, **dadurch gekennzeichnet, dass** zusätzlich zu Schritt d) des Anspruches 1 eine Anlasswärmebehandlung der Schweißnähte ( 23 ) an den Montageschlitzen ( 18 ) der Rohrwandregister ( 2, 2.1, 2.2 ) mittels im Bereich der Schweißnähte ( 23 ) und beidseitig an den Rohrwandregistern ( 2, 2.1, 2.2 ) angebrachte zweite Heizeinrichtungen (10) montageseitig erfolgt.

6. Verfahren nach Anspruch 3, **dadurch gekennzeichnet, dass** die Länge des Steges ( 4.1 ) der Länge des Montageschlitzes ( 18 ) zuzüglich eines Übermaßes ( X ) von 10 bis 100 mm entspricht.

7. Verfahren nach Anspruch 1, **dadurch gekennzeichnet, dass** einzelne oder alle Rohre ( 3, 3.1 ) eines Rohrwandregisters ( 2, 2.1, 2.2 ) an deren Rundnaht-Registerstoß ( 7 ) mit einer Rohr-Aufschuhung ( 19 ) aus einem nicht wärmezubehandelnden Werkstoff ausgebildet sind.

8. Verfahren nach Anspruch 7, **dadurch gekennzeichnet, dass** Rohre ( 3, 3.1 ) in unmittelbarer Nachbarschaft eines Montageschlitzes ( 18 ) mit einer Rohr-Aufschuhung ( 19 ) ausgebildet werden und die Länge der Rohr-Aufschuhung (19) der Länge des Steges ( 4.1 ) entspricht.

9. Verfahren nach Anspruch 1, **dadurch gekennzeichnet, dass** das Aufnahmemittel als Füllblech ( 22 ) ausgebildet ist und dieses eine Öffnung verschließt, die durch das Ausbiegen wenigstens eines Rohres ( 3, 3.1 ) im Rohrwandbereich ( 26 ) mit Rohrdurchtritt entsteht, wobei das Füllblech ( 22 ) mit den die freigewordene Öffnung umgebenden Rohre ( 3, 3.1 ) und/oder Stege ( 4, 4.1 ) und/oder Halbstege ( 5 ) mittels Schweißnaht ( 15 ) verbunden wird.

10. Verfahren nach Anspruch 1 oder 9, **dadurch gekennzeichnet, dass** das Aufnahmemittel als Hülse ( 13 ) ausgebildet ist und diese entweder innerhalb eines Steges ( 4 ) oder innerhalb zweier Halbstege ( 5 ) oder innerhalb eines Füllbleches ( 22 ) angeordnet und mit diesem verschweißt wird.

11. Verfahren nach Anspruch 1, **dadurch gekennzeichnet, dass** zusätzlich zu Schritt d) zusätzliche dritte Heizeinrichtungen ( 11 ) im Nachbarbereich der im Bereich der Schweißnähte ( 9, 9.1 ) und beidseitig an den Rohrwandregistern ( 2, 2.1, 2.2 ) angebrachten zweiten Heizeinrichtungen ( 10 ) zur Erzeugung von Stützwärme eingesetzt werden.

12. Verfahren nach Anspruch 1, **dadurch gekennzeichnet, dass** bei Verwendung eines aus 9-12% chromhaltigem, martensitischem Stahl bestehenden Halbsteges ( 5 ) das angrenzende Rohr ( 3.1 ) ebenfalls aus 9-12% chromhaltigem, martensitischem Stahl besteht.

13. Verfahren nach Anspruch 1 oder 5 oder 11, **dadurch gekennzeichnet, dass** während der Anlasswarmebehandlung der Glühbereich der Rohrwandregister ( 2, 2.1, 2.2 ) von Kräften entlastet wird mittels Kraftumlenkung des Eigengewichtes durch eine hydraulische oder mechanische Hilfskonstruktion.

14. Verfahren nach Anspruch 1 oder 3, **dadurch gekennzeichnet, dass** die Stege ( 4, 4.1 ) und Halbstege ( 5 ) an deren rohrangrenzenden Seitenflächen ( 31 ) mit Naturwalzkanten von jeweils bis zu 2 mm ausgebildet werden.

15. Verfahren nach Anspruch 1 oder 3, **dadurch gekennzeichnet, dass** die rohrangrenzenden Seitenflächen ( 31 ) der Stege ( 4, 4.1 ) und Halbstege ( 5 ) im Bereich der Rundnaht-Registerstöße ( 7 ) mit einer Anfasung für eine Doppel-HV-Naht ausgebildet werden.

16. Verfahren nach Anspruch 1 oder 4, **dadurch gekennzeichnet, dass** die als Füllschweißungen ausgebildeten Schweißnähte ( 9.1, 23 ) an den Füllblechen ( 27 ) und/oder an den Montageschlitzen ( 18 ) mittels WIG-Verfahren hergestellt werden.

17. Verfahren nach Anspruch 1 oder 3, **dadurch gekennzeichnet, dass** vor dem werkstattseitigen Verbinden der Stege ( 4, 4.1 ) und der Halbstege ( 5 ) mit den Rohren (3, 3.1 ) mittels Schweißnaht ( 8 ) diese Bauteile vorgewärmt und anschließend die Schweißnähte ( 8 ) mittels UP-Schweißverfahren hergestellt werden.

18. Verfahren nach Anspruch 1, **dadurch gekennzeichnet, dass** zusätzlich zu Schritt a) im Verlauf der Herstellung der Rohrwandregister ( 2, 2.1, 2.2 ) Teile bzw. Segmente der noch nicht komplettierten Rohrvvandregister ( 2, 2.1, 2.2 ) zwischengeglüht werden.

19. Verfahren nach Anspruch 1, **dadurch gekennzeichnet, dass** für das montageseitige Anschweißen von Bauteilen geeignete Montage-Schweißverbindungsstellen von zusätzlichen und überwiegend aus 9-12% chromhaltigem, martensitischem Stahl bestehenden Anschweißteilen werkstattseitig mit einer aus einem nicht wärmezubehandelnden Werkstoff bestehenden Plattierung und/oder einem aus nicht wärmezubehandelnden Werkstoff bestehendem geschmiedeten oder gewalzten Halbzeug und/oder einer aus einem nicht wärmezubehandelnden Schweißgut bestehenden Auffütterung ausgebildet werden und die Anschweißteile anschließend werkstattseitig mit dem Rohrwandregister ( 2, 2.1, 2.2 ) verschweißt werden bevor sie Schritt b) unterzogen werden.

20. Verfahren nach einem der vorgenannten Ansprüche, **dadurch gekennzeichnet, dass** für das Verschweißen der aus 9-12% chromhaltigen martensitischen Stählen bestehenden Rohre (3, 3.1 ), Stege ( 4 ), Halbstege ( 5 ), Formstücke ( 24 ) und Füllbleche ( 27 ) untereinander ein artgleicher Schweißzusatzwerkstoff verwendet wird.

21. Verfahren nach einem der vorgenannten Ansprüche, **dadurch gekennzeichnet, dass** für das Verschweißen der aus einem nicht wärmezubehandelnden Werkstoff bestehenden Rohre ( 3.1 ), Stege ( 4.1 ), Halbstege ( 5 ), Hülsen ( 13 ), Füllbleche ( 22 ), Eckbögen ( 28 ), Verbindungsstege ( 29 ) an Eckbögen ( 28 ) und Aufpufferungen ( 21 ) untereinander ein artgleicher Schweißzusatzwerkstoff verwendet wird.

22. Verfahren nach einem der vorgenannten Ansprüche, **dadurch gekennzeichnet, dass** für das Verschweißen der aus 9-12% chromhaltigen martensitischen Stählen bestehenden Rohre ( 3, 3.1 ) und/oder Stege ( 4 ) und/oder Halbstege ( 5 ) und/oder Formstücke ( 24 ) und/oder Füllbleche ( 27 ) mit den aus einem nicht wärmezubehandelnden Werkstoff bestehenden Rohren ( 3.1 ) und/oder Stegen ( 4.1 ) und/oder Halbstegen ( 5 ) und/oder Hülsen ( 13 ) und/oder Füllbleche ( 22 ) und/oder Eckbögen ( 28 ) und/oder Verbindungsstege ( 29 ) an Eckbögen ( 28 ) und/oder Aufpufferungen ( 21 ) ein Schweißzusatzwerkstoff verwendet wird, der keiner Wärmenachbehandlung bedarf.

23. Verfahren nach einem der vorgenannten Ansprüche, **dadurch gekennzeichnet, dass** als 9-12% chromhaltiger martensitischer Stahl der Werkstoff X10CrWMoVNb9-2 eingesetzt wird.

24. Verfahren nach einem der vorgenannten Ansprüche, **dadurch gekennzeichnet, dass** als nicht wärmezubehandelnder Werkstoff der Werkstoff NiCr23Co12Mo mod oder NiCr23Co 12Mo eingesetzt wird.

25. Verfahren nach Anspruch 1, **dadurch gekennzeichnet, dass** gemäß Schritt a) für die Herstellung gebogener Rohrwandregister ( 2.1 ) die Halbstege ( 5 ) und die jeweils äußersten Rohre ( 3.1 ) aus einem nicht wärmezubehandelnden Werkstoff bestehen.

26. Verfahren nach Anspruch 1, **dadurch gekennzeichnet, dass** für die Herstellung von schräg berohrten Rohrwänden ( 1 ) plane und gebogene Rohrwandregister ( 2, 2.1 ) oder plane Rohrwandregister ( 2 ) und Eckbögen ( 28 ) verwendet werden.

27. Verfahren nach Anspruch 1, **dadurch gekennzeichnet, dass** für die Herstellung von vertikal berohrten Rohrwänden ( 1 ) plane Rohrwandregister ( 2 ) verwendet werden.

28. Verfahren nach Anspruch 1, **dadurch gekennzeichnet, dass** für die Herstellung von schräg und vertikal berohrten Rohrwänden ( 1 ) plane, gebogene und Übergangs-Rohrwandregister ( 2, 2.1, 2.2 ) oder plane und Übergangs-Rohrwandregister ( 2, 2.2 ) und Eckbögen ( 28 ) verwendet werden.

29. Verfahren nach Anspruch 1, **dadurch gekennzeichnet, dass** die Anlasswärmebehandlung bei einer Temperatur von 740 bis 780° C erfolgt.

30. Verfahren nach Anspruch 1, **dadurch gekennzeichnet, dass** die Anlasswärmebehandlung über eine Zeitspanne von 2 min/mm Wandstärke, mindestens jedoch über 60 min erfolgt.

## Claims

1. Method for producing steam generator tube walls consisting primarily of 9-12% martensitic chromium steels, whereby the tube walls (1) are formed from a tube-fin-tube combination and are comprised of a multiplicity of at least one of the tube wall components made of plane tube wall panels (2), curved tube wall panels (2.1), transition tube wall panels (2.2) and corner bends (28) and are configured with a take-up means (13, 22) with one penetration opening (20) each at tube wall regions (26) at which tubes (14) are passed through the tube wall (1) and the tube wall panels (2, 2.1, 2.2) exhibit at the periphery longitudinal fin-fin panel joints (6) and transverse circumferential weld-panel joints (7) and the method includes the following steps,
a) production of the plane and/or curved and/or transition tube wall panels (2, 2.1, 2.2) and/or corner bends (28) in the workshop by connecting the tubes (3, 3.1), fins (4) and half-fins (5) by means of welded seams (8), and the take-up means (13, 22) by means of welded seams (15) to tube wall panels (2, 2.1, 2.2), whereby the transition tube wall panel (2.2) is configured with fittings (24) which are connected at the transition (32) with the ends of the inclined and vertically arranged tubes (3, 3.1) by means of a welded seam (25) and through connecting the corner bend (28) with a connecting fin (29) by means of a welded seam (30), and whereby the middle tubes (3) and the fins (4) are made of a 9-12% martensitic chromium steel and the each outermost tube (3.1) on both sides of a tube wall panel (2, 2.1, 2.2) is made of a 9-12% martensitic chromium steel or of a material that is not to be heat treated,
the half-fins (5) arranged at the fin-fin panel joints (6) are made of a material that is not to be heat treated or of a 9-12% martensitic chromium steel, and applied on same along the fin-fin panel joints (6) is a buffering (21) made of a material that does not require tempering treatment,
the take-up means (13, 22) are made of a material that is not to be heat treated,
the corner bends (28) with connecting fins (29) are made of a material that is not to be heat treated, and
whereby the fittings (24) are made of a 9-12% martensitic chromium steel or of a material that is not to be heat treated,
b) tempering treatment of the welded seams (8, 15, 21, 25) of the produced tube wall panels (2, 2.1, 2.2) in the workshop by means of a first heating device,
c) connecting of the plane and/or curved, and/or transition tube wall panels (2, 2.1, 2.2) and/or corner bends (28) at their circumferential weld-panel joints (7) by using filler plates (27) by means of welded seams (9, 9.1) at the assembly site, whereby the filler plates (27) are made of a 9-12% martensitic chromium steel,
d) tempering treatment of the welded seams (9, 9.1) at the circumferential weld-panel joints (7) of the tube wall panels (2, 2.1, 2.2) and/or corner bends (28) at the assembly site by means of second heating devices (10) located in the region of the welded seams (9, 9.1) and on both sides of the tube wall panels (2, 2.1, 2.2),
e) connecting of the plane and/or curved and/or transition tube wall panels (2, 2.1, 2.2) and/or corner bends (28) at their fin-fin panel joints (6) at the assembly site by means of welded seams (12) without a subsequent tempering treatment of these welded seams (12),
f) passing of the tubes (14) prepared with mounted sleeves (17) through the particular take-up means (13, 22) of the tube walls (1), whereby each of the sleeves (17) prepared from a material that is not to be heat treated is arranged in the penetration region of the tube wall (1) and is connected with the tube (14), and connecting of the sleeve (17) with the take-up means (13, 22) at the assembly site by means of a welded seam (16) without a subsequent tempering treatment of these welded seams (16).

2. Method according to Claim 1, **characterized in that** the corner bends (28) are configured as single or double bends.

3. Method according to Claim 1, **characterized in that** in addition to step a), at least one of the fins (4) of a tube wall panel (2, 2.1, 2.2) exhibits, over a partial region of its elongated extent and starting either from one end of the fin (4) or from both ends of the fin (4), an assembly slot (18) formed in the longitudinal direction of the fin for the compensation of dimensional inaccuracies, and that in the region of the assembly slot (18), the fin (4) made of 9-12% martensitic chromium steel is replaced with a fin (4.1) made of a material that does not have to be post-weld heat treated.

4. Method according to Claim 3, **characterized in that** in addition to step c) of Claim 1, the assembly slots (18) are closed at the assembly site by means of welded seams (23) following compensation of dimensional inaccuracies at the tube wall panels (2, 2.1, 2.2).

5. Method according to Claim 4, **characterized in that** in addition to step d) of Claim 1, tempering treatment of the welded seams (23) at the assembly slots (18) of the tube wall panels (2, 2.1, 2.2) takes place at the assembly site by means of second heating devices (10) located in the region of the welded seams (23) and on both sides of the tube wall panels (2, 2.1, 2.2).

6. Method according to Claim 3, **characterized in that** the length of the fin (4.1) corresponds to the length of the assembly slot (18) plus an excess amount (X) of 10 to 100 mm.

7. Method according to Claim 1, **characterized in that** individual or all tubes (3, 3.1) of a tube wall panel (2, 2.1, 2.2) are configured at their circumferential weld-panel joint (7) with a tube extension (19) that is made of a material that is not to be heat treated.

8. Method according to Claim 7, **characterized in that** the tubes (3, 3.1) directly adjacent to an assembly slot (18) are configured with a tube extension (19) and the length of the tube extension (19) corresponds to the length of the fin (4.1).

9. Method according to Claim 1, **characterized in that** the take-up means is configured as a filler plate (22) and the latter closes an opening that results through the bending outward of at least one tube (3, 3.1) in the tube wall region (26) with a tube penetration, whereby the filler plate (22) is connected by means of a welded seam (15) with the tubes (3, 3.1) and/or fins (4, 4.1) and/or half-fins (5) that surround the opening that has been freed.

10. Method according to Claim 1 or 9, **characterized in that** the take-up means is configured as a sleeve (13) and the latter is arranged either within a fin (4) or within two half-fins (5) or within a filler plate (22) and is welded to same.

11. Method according to Claim 1, **characterized in that** in addition to step d), additional third heating devices (11) are located in the region adjacent to the second heating devices (10) which are located in the region of the weld seams (9, 9.1) and on both sides of the tube wall panels (2, 2.1, 2.2) to generate auxiliary heat.

12. Method according to Claim 1, **characterized in that** when a half-fin (5) made of a 9-12% martensitic chromium steel is used, the adjacent tube (3.1) is also made of 9-12% martensitic chromium steel.

13. Method according to Claim 1 or 5 or 11, **characterized in that** during the tempering treatment, the annealing region of the tube wall panels (2, 2.1, 2.2) is relieved of forces by means of force deflection of its own weight by means of a hydraulic or mechanical auxiliary structure.

14. Method according to Claim 1 or 3, **characterized in that** the fins (4, 4.1) and half-fins (5) are configured at their side surfaces (31) adjacent to the tubes with natural rolled edges of up to 2 mm each.

15. Method according to Claim 1 or 3, **characterized in that** the side surfaces (31) of the fins (4, 4.1) and half-fins (5) adjacent to the tubes are configured in the region of the circumferential weld-panel joints (7) with a chamfer for a double bevel groove weld.

16. Method according to Claim 1 or 4, **characterized in that** the welded seams (9.1, 23) configured as filling welds at the filler plates (27) and/or at the assembly slots (18) are produced by means of WIG welding.

17. Method according to Claim 1 or 3, **characterized in that** prior to the workshop connecting of the fins (4, 4.1) and the half-fins (5) with the tubes (3, 3.1) by means of a welded seam (8), these components are preheated and subsequently the welded seams (8) are produced by means of a SAW welding method.

18. Method according to Claim 1, **characterized in that** in addition to step a), during the course of the production of the tube wall panels (2, 2.1, 2.2) parts or segments of the not yet completed tube wall panels (2, 2.1, 2.2) are intermediately annealed.

19. Method according to Claim 1, **characterized in that** for the welding on of components at the assembly site, suitable assembly weld connection locations of additional weld-on parts made primarily of 9-12% martensitic chromium steel are formed at the workshop with a plating made of a material that is not to be heat treated and/or a forged or rolled semifinished product made from a material that is not to be heat treated and/or from a buffering made of welding material that is not to be heat treated, and the weld-on parts are then welded to the tube wall panel (2, 2.1, 2.2) in the workshop before they are subjected to step b).

20. Method according to one of the above-mentioned claims, **characterized in that** a welding filler material of the same kind is used for welding to each other the tubes (3, 3.1), fins (4), half-fins (5), fittings (24) and filler plates (27) made of 9-12% martensitic chromium steels.

21. Method according to one of the above-mentioned claims, **characterized in that** a welding filler material of the same kind is used for welding to each other the tubes (3.1), fins (4.1), half-fins (5), sleeves (13), filler plates (22), corner bends (28), connecting fins (29) on corner bends (28), and bufferings (21) made of a material that is not to be heat treated.

22. Method according to one of the above-mentioned claims, **characterized in that** a welding filler material made of a material that does not require post-weld heat treatment is used for welding the tubes (3, 3.1), and/or fins (4), and/or half-fins (5), and/or fittings (24) and/or filler plates (27) made of 9-12% martensitic chromium steels to the tubes (3.1), and/or fins (4.1), and/or half-fins (5), and/or sleeves (13), and/or filler plates (22), and/or corner bends (28), and/or connecting fins (29) on corner bends (28), and/or bufferings (21) made of a material that is not to be heat treated.

23. Method according to one of the above-mentioned claims, **characterized in that** the material X10CrWMoVNb9-2 is used as the 9-12% martensitic chromium steel.

24. Method according to one of the above-mentioned claims, **characterized in that** the material NiCr23Co12Mo mod or NiCr23Co12Mo is used as the material that is not to be heat treated.

25. Method according to Claim 1, **characterized in that** according to step a), the half-fins (5) and the each outermost tubes (3.1) for the production of curved tube wall panels (2.1) are made of a material that is not to be heat treated.

26. Method according to Claim 1, **characterized in that** plane and curved tube wall panels (2, 2.1) or plane tube wall panels (2) and corner bends (28) are used for the production of inclined tubed tube walls (1).

27. Method according to Claim 1, **characterized in that** plane tube wall panels (2) are used for the production of vertically tubed tube walls (1).

28. Method according to Claim 1, **characterized in that** plane, curved and transition wall panels (2, 2.1, 2.2) or plane and transition tube wall panels (2, 2.2) and corner bends (28) are used for the production of inclined and vertically tubed tube walls (1).

29. Method according to Claim 1, **characterized in that** the tempering treatment takes place at a temperature of 740 to 780°C.

30. Method according to Claim 1, **characterized in that** the tempering treatment takes place over a time span of 2 minutes/mm of wall thickness, but at least for 60 minutes.

## Revendications

1. Procédé de fabrication de parois tubulaires de générateurs de vapeur composées majoritairement d'acier martensitique contenant 9 à 12 % de chrome, les parois tubulaires (1) étant constituées d'une combinaison tube-traverse-paroi et étant composées d'une multitude d'au moins une des composantes de la paroi tubulaire constituée des registres de paroi tubulaire (2) plats, des registres de paroi tubulaire courbés (2.1), des registres de paroi tubulaire de transition (2.2) et des arcs d'angle (28) et étant réalisées avec un moyen support (13, 22) doté respectivement d'un orifice de passage (20) sur des zones de la paroi tubulaire (26) où des tubes (14) sont passés à travers la paroi tubulaire (1) et les registres de paroi tubulaire (2, 2.1, 2.2) présentant au niveau longitudinal sur leur périphérie des butées traverse-traverse-registre (6) et au niveau transversal des butées soudure circulaire-registre (7) et le procédé comportant les étapes suivantes :
a) fabrication des registres de paroi tubulaire plats et/ou courbés et/ou de transition (2, 2.1, 2.2) et/ou des arcs d'angle (28) en atelier en raccordant les tubes (3, 3.1), les traverses (4) et les demi-traverses (5) au moyen de cordons de soudure (8) et des moyens support (13, 22) au moyen de cordons de soudure (8) aux registres de paroi tubulaire (2, 2.1, 2.2), les registres de paroi tubulaire de transition (2.2) étant réalisés avec des pièces moulées (24) qui sont raccordées au niveau de la transition (32) aux extrémités des tubes (3, 3.1) s'étendant obliquement et verticalement au moyen d'un cordon de soudure (25) et par raccordement de l'arc d'angle (28) à une traverse de raccordement (29) au moyen d'un cordon de soudure (30) et
les tubes médians (3) et les traverses (4) étant composés d'un acier martensitique contenant 9 à 12 % de chrome et le tube respectivement le plus extérieur (3.1) des deux côtés d'un registre de paroi tubulaire (2, 2.1, 2.2) étant composé d'un acier martensitique contenant 9 à 12 % de chrome ou d'un matériau ne nécessitant pas de traitement thermique,
les demi-traverses (5) disposées au niveau des butées traverse-traverse-registre (6) étant composées d'un matériau ne nécessitant pas de traitement thermique ou d'un acier martensitique contenant 9 à 12 % de chrome et étant appliqué sur ces dernières, le long des deux butées traverse-traverse-registre (6), un tamponnage (21) composé d'un matériau ne nécessitant pas de traitement thermique par revenu,
les moyens support (13, 22) étant composés d'un matériau ne nécessitant pas de traitement thermique,
les arcs d'angle (28) avec les traverses de raccordement (29) étant composés d'un matériau ne nécessitant pas de traitement thermique et
les pièces moulées (24) étant composées d'un acier martensitique contenant 9 à 12 % de chrome ou d'un matériau ne nécessitant pas de traitement thermique.
b) traitement thermique par revenu en atelier des cordons de soudure (8, 15, 21, 25) des registres de paroi tubulaire fabriqués (2, 2.1, 2.2) au moyen d'un premier dispositif de chauffage,
c) raccordement des registres de paroi tubulaire plats et/courbés et/ou de transition (2, 2.1, 2.2) et/ou des arcs d'angle (28) au niveau de leurs butées cordon circulaire-registre (7) en insérant au montage des tôles de remplissage (27) au moyen de cordons de soudure (9, 9.1), les tôles de remplissage (27) étant composées d'un acier martensitique contenant 9 à 1 % de chrome,
d) traitement thermique par revenu des cordons de soudure (9, 9.1) au niveau des butées cordon circulaire-registre (7) des registres de paroi tubulaire (2, 2.1, 2.2) et/ou des arcs d'angle (28) au montage au moyen de deuxièmes dispositifs de chauffage (10) installés au niveau des cordons de soudure (9, 9.1) et des deux côtés des registres de paroi tubulaire (2, 2.1, 2.2),
e) raccordement au montage des registres de paroi tubulaire plats et/ou courbés et/ou de transition (2, 2.1, 2.2) et/ou des arcs d'angle (28) au niveau de leurs butées traverse-traverse-registre (6) au moyen de cordons de soudure (12) sans traitement thermique par revenu consécutif de ces cordons de soudure (12),
f) passage des tubes (14) préparés avec les manchons (17) posés dessus dans les moyens support respectifs (13, 22) des parois tubulaires (1), les manchons préparés (17) en matériau ne nécessitant pas de traitement thermique étant disposés respectivement dans la zone de passage dans la paroi tubulaire (1) et raccordés au tube (14), et raccordement au montage du manchon (17) au moyen support (13, 22) au moyen d'un cordon de soudure (16) sans traitement thermique par revenu consécutif de ces cordons de soudure (16).

2. Procédé selon la revendication 1, **caractérisé en ce que** les arcs d'angle (28) sont réalisés sous forme d'arcs simples ou jumeaux.

3. Procédé selon la revendication 1, **caractérisé en ce que**, en plus de l'étape a), au moins une des traverses (4) d'un registre de paroi tubulaire (2, 2.1, 2.2) présente, sur une zone partielle de son extension longitudinale et en partant soit d'une extrémité de la traverse (4), soit des deux extrémités de la traverse (4), une fente de montage (18) pratiquée dans le sens longitudinal de la traverse (4) pour la compensation d'imprécisions de cotes et que la traverse (4) composée d'un acier martensitique contenant 9 à 12 % de chrome est remplacée au niveau de la fente de montage (18) par une traverse (4.1) composée d'un matériau ne nécessitant pas de traitement thermique.

4. Procédé selon la revendication 3, **caractérisé en ce que**, en plus de l'étape c) de la revendication 1, les fentes de montage (18), après la compensation d'imprécisions de cotes au niveau des registres de paroi tubulaire (2, 2.1, 2.2), sont fermées au montage au moyen de cordons de soudure (23).

5. Procédé selon la revendication 4, **caractérisé en ce que**, en plus de l'étape d) de la revendication 1, il y a au montage un traitement thermique par revenu des cordons de soudure (23) au niveau des fentes de montage (18) des registres de paroi tubulaire (2, 2.1, 2.2) au moyen de deuxièmes dispositifs de chauffage (10) installés au niveau des cordons de soudure (23) et des deux côtés des registres de paroi tubulaire (2, 2.1, 2.2),

6. Procédé selon la revendication 3, **caractérisé en ce que** la longueur de la traverse (4.1) équivaut à la longueur de la fente de montage (18) plus une surcote (X) de 10 à 100 mm.

7. Procédé selon la revendication 1, **caractérisé en ce que** certains ou la totalité des tubes (3, 3.1) d'un registre de paroi tubulaire (2, 2.1, 2.2) sont réalisés, au niveau de leur butée cordon circulaire-tube (7) avec un sabot tubulaire (19) en matériau ne nécessitant pas de traitement thermique.

8. Procédé selon la revendication 7, **caractérisé en ce que** des tubes (3, 3.1) sont réalisés dans le voisinage immédiat d'une fente de montage (18) avec un sabot tubulaire (19) et que la longueur du sabot tubulaire (19) équivaut à la longueur de la traverse (4.1).

9. Procédé selon la revendication 1, **caractérisé en ce que** le moyen support est réalisé sous forme d'une tôle de remplissage (22) et qu'il ferme un orifice qui se crée par la flexion d'au moins un tube (3, 3.1) au niveau de la paroi tubulaire (26) avec le passage de tube, la tôle de remplissage (22) étant raccordée aux tubes (3, 3.1) et/ou traverses (4, 4.1) et/ou demi-traverses (5) entourant l'orifice libéré au moyen d'un cordon de soudure (15).

10. Procédé selon la revendication 1 ou 9, **caractérisé en ce que** le moyen support est réalisé sous forme d'un manchon (13) et qu'il est disposé soit dans une traverse (4), soit dans deux demi-traverses (5), soit dans une tôle de remplissage (22) et est soudé avec.

11. Procédé selon la revendication 1, **caractérisé en ce que**, en plus de l'étape d), des troisièmes dispositifs de chauffage supplémentaires (11) sont insérés dans le voisinage des deuxièmes dispositifs de chauffage (10) installés au niveau des cordons de soudure (9, 9.1) et des deux côtés des registres de paroi tubulaire (2, 2.1, 2.2) pour générer de la chaleur d'assistance.

12. Procédé selon la revendication 1, **caractérisé en ce que**, en cas d'utilisation d'une demi-traverse (5) composée d'un acier martensitique contenant 9 à 12 % de chrome, le tube adjacent (3.1) est également composé d'un acier martensitique contenant 9 à 12 % de chrome.

13. Procédé selon la revendication 1 ou 5 ou 11, **caractérisé en ce que**, pendant le traitement thermique par revenu, la zone de recuit des registres de paroi tubulaire (2, 2.1, 2.2) est délestée des forces au moyen d'une inversion des forces de son poids propre par une structure auxiliaire hydraulique ou mécanique.

14. Procédé selon la revendication 1 ou 3, **caractérisé en ce que** les traverses (4, 4.1) et demi-traverses (5) sont réalisées, au niveau de leurs surfaces latérales (31) adjacentes aux tubes, avec des arêtes laminées naturelles atteignant respectivement 2 mm.

15. Procédé selon la revendication 1 ou 3, **caractérisé en ce que** les surfaces latérales (31) adjacentes aux tubes des traverses (4, 4.1) et demi-traverses (5) sont réalisées au niveau de leurs butées cordon circulaire-registre (7) avec un chanfreinage pour un double cordon HV.

16. Procédé selon la revendication 1 ou 4, **caractérisé en ce que** les cordons de soudure (9.1, 23) réalisés sous forme de soudures de remplissage au niveau des tôles de remplissage (27) et/ou des fentes de montage (18), sont réalisés par procédé WIG.

17. Procédé selon la revendication 1 ou 3, **caractérisé en ce que**, avant le raccordement en atelier des traverses (4, 4.1) et demi-traverses (5) avec les tubes (3, 3.1) au moyen d'un cordon de soudure (8), ces composantes sont préchauffées puis les cordons de soudure (8) sont réalisés par procédé de soudage UP.

18. Procédé selon la revendication 1, **caractérisé en ce que**, en plus de l'étape a), au cours de la fabrication des registres de paroi tubulaire (2, 2.1, 2.2), des parties ou segments des registres de paroi tubulaire (2, 2.1, 2.2) pas encore finis sont recuits ensemble.

19. Procédé selon la revendication 1, **caractérisé en ce que**, pour le soudage au montage des composantes, des points de raccordement adaptées de soudure de montage de pièces soudées supplémentaires et majoritairement composées d'un acier martensitique contenant 9 à 12 % de chrome sont réalisés en atelier avec un placage composé d'un matériau ne nécessitant pas de traitement thermique et/ou d'un produit semi-fini soudé ou laminé composé d'un matériau ne nécessitant pas de traitement thermique et/ou un mandrin composé d'un matériau ne nécessitant pas de traitement thermique et que les pièces soudées sont ensuite soudées en atelier au registre de paroi tubulaire (2, 2.1, 2.2) avant de subir l'étape b).

20. Procédé selon une des revendications précédentes, **caractérisé en ce que**, pour le soudage des tubes (3, 3.1) composés d'aciers martensitiques contenant 9 à 12 % de chrome, des traverses (4), demi-traverses (5), pièces moulées (24) et tôles de remplissage (27) entre eux, on utilise un matériau de soudage supplémentaire de même genre.

21. Procédé selon une des revendications précédentes, **caractérisé en ce que**, pour le soudage des tubes (3.1), traverses (4.1), demi-traverses (5), manchons (13), tôles de remplissage (22), arcs d'angle (28), traverses de raccordement (29) au niveau des arcs d'angle (28) et tamponnages (21) composés d'un matériau ne nécessitant pas de traitement thermique, entre eux, on utilise un matériau de soudage supplémentaire de même genre.

22. Procédé selon une des revendications précédentes, **caractérisé en ce que**, pour le soudage des tubes (3, 3.1) et/ou traverses (4) et/ou demi-traverses (5) et/ou pièces moulées (24) et/ou tôles de remplissage (27) composés d'aciers martensitiques contenant 9 à 12 % de chrome avec les tubes (3.1) et/ou traverses (4.1) et/ou demi-traverses (5) et/ou manchons (13) et/ou tôles de remplissage (22) et/ou arcs d'angle (28) et/ou traverses de raccordement (29) au niveau des arcs d'angle (28) et/ou tamponnages (21) composés d'un matériau ne nécessitant pas de traitement thermique, on utilise un matériau de soudage supplémentaire qui ne nécessite pas de traitement thermique.

23. Procédé selon une des revendications précédentes, **caractérisé en ce qu'**on utilise comme acier martensitique contenant 9 à 12 % de chrome le matériau X10CrWMoVNb9-2.

24. Procédé selon une des revendications précédentes, **caractérisé en ce qu'**on utilise comme matériau ne nécessitant pas de traitement thermique le matériau NiCr23Co12Mo mod ou NiCr23Co12Mo.

25. Procédé selon la revendication 1, **caractérisé en ce que**, suivant l'étape a) pour la fabrication de registres de paroi tubulaire courbés (2.1), les demi-traverses (5) et les tubes respectivement les plus extérieurs (3.1) sont composés d'un matériau ne nécessitant pas de traitement thermique.

26. Procédé selon la revendication 1, **caractérisé en ce que**, pour la fabrication de paroi tubulaires en tube oblique (1), on utilise des registres de paroi tubulaire plats et courbés (2, 2.1) ou des registres de paroi tubulaire plats (2) et des arcs d'angle (28).

27. Procédé selon la revendication 1, **caractérisé en ce que**, pour la fabrication de paroi tubulaires en tube vertical (1), on utilise des registres de paroi tubulaire plats (2).

28. Procédé selon la revendication 1, **caractérisé en ce que**, pour la fabrication de paroi tubulaires en tube oblique et vertical (1), on utilise des registres de paroi tubulaire plats, courbés et de transition (2, 2.1, 2.2) ou des registres de paroi tubulaire plats et de transition (2, 2.2) et des arcs d'angle (28).

29. Procédé selon la revendication 1, **caractérisé en ce que** le traitement thermique par revenu se fait à une température de 740 à 780° C.

30. Procédé selon la revendication 1, **caractérisé en ce que** le traitement thermique par revenu se fait sur un laps de temps de 2 min/mm d'épaisseur de paroi, mais au moins sur 60 min.
